(19) **Europäisches Patentamt / European Patent Office / Office européen des brevets**

(11) **EP 3 926 150 B1**

(12) **EUROPÄISCHE PATENTSCHRIFT**

(45) Veröffentlichungstag und Bekanntmachung des Hinweises auf die Patenterteilung:
**13.03.2024 Patentblatt 2024/11**

(21) Anmeldenummer: **20180947.2**

(22) Anmeldetag: **18.06.2020**

(51) Internationale Patentklassifikation (IPC):
**F01K 17/02** (2006.01)

(52) Gemeinsame Patentklassifikation (CPC):
**F01K 17/02;** Y02E 50/10; Y02E 50/30

(54) **VERFAHREN ZUR HERSTELLUNG EINER HOLZFEINFRAKTION, EINE HOLZFEINFRAKTION UND EIN VERFAHREN ZUR ENERGIEERZEUGUNG**

METHOD FOR PRODUCING A FINE WOOD FRACTION COMPRISING A FINE WOOD FRACTION AND A METHOD FOR PRODUCING ENERGY

PROCÉDÉ DE FABRICATION D'UNE FRACTION FINE DE BOIS, FRACTION FINE DE BOIS ET PROCÉDÉ DE PRODUCTION DE L'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.12.2021 Patentblatt 2021/51**

(73) Patentinhaber: **Koehler Renewable Energy GmbH 77704 Oberkirch (DE)**

(72) Erfinder:
• **Hagebölling, Birgit 38108 Braunschweig (DE)**
• **Schmölz, Michael 87629 Füssen (DE)**

(74) Vertreter: **Meissner Bolte Partnerschaft mbB Patentanwälte Rechtsanwälte Postfach 86 06 24 81633 München (DE)**

(56) Entgegenhaltungen:
US-A- 5 571 293

• **MIRJAM RÖDER, PATRICIA THORNLEY: "Waste wood as bioenergy feedstock. Climate change impacts and related emission uncertainties from waste wood based energy systems in the UKWaste wood", WASTE MANAGEMENT - ELSEVIER, Bd. 74, 6. Dezember 2017 (2017-12-06), Seiten 241-252, XP002801263, DOI: https://doi.org/10.1016/j.wasman.2017.11.0 42**
• **M KRAJNC, B DOLSAK: "The influence of drum chipper configuration on the quality of wood chips", BIOMASS AND BIOENERGY- ELSEVIER, Bd. 64, 30. März 2014 (2014-03-30), Seiten 133-139, XP002801264, DOI: https://doi.org/10.1016/j.biombioe.2014.03 .011**

**Beschreibung**

Die Erfindung betrifft ein Verfahren zur Herstellung einer Holzfeinfraktion, eine Holzfeinfraktion und ein Verfahren zur Energieerzeugung. Das Dokument MIRJAM RäDER, PATRICIA THORNLEY: "Waste wood as bioenergy feedstock. Climate change impacts and related emission uncertainties from waste wood based energy systems in the UK Waste wood", WASTE MANAGEMENT - ELSEVIER, Bd. 74, 6. Dezember 2017 (2017-12-06), Seiten 241-252, bezieht sich auf die Herstellung von Pellets und Chips.

Die Energiegewinnung aus Braunkohle hat sich über die letzten Jahrzehnte unter anderem aufgrund der inländischen Verfügbarkeit sowie einer hohen Preisstabilität in Deutschland etabliert. Eingesetzt in Grundlastkraftwerken und der dezentralen Versorgung energieintensiver Branchen gehen damit jedoch erhebliche Luftemissionen in Form von Kohlenstoffdioxid, Stickoxiden sowie Schwefeldioxid einher. Einen generellen Überblick gibt das Umweltbundesamt in "Daten und Fakten zu Braun- und Steinkohlen (2017)" oder alternativ bzw. ergänzend der Bundesverband Braunkohle (DEBRIV) in "Maaßen und Schiffer: Braunkohle in Deutschland, Sicherheit für die Stromversorgung (2017)".

Neben den zentralen Großkraftwerken werden vor allem in wärmeintensiven Branchen eigene verhältnismäßig kleine Kohlekraftwerke zur effizienten und kostengünstigen Bereitstellung von Wärme und Strom dezentral betrieben. Neben der sog. Wirbelschichtfeuerung, die in der Regel in großen zentralen Kraftwerken zum Einsatz kommt, hat sich in den kleineren dezentralen Bereichen hingegen die sog. Braunkohlenstaubfeuerung in Großwasserraumkesseln oder auch Wasserrohrkesseln etabliert. Eine schematische Darstellung eines standardmäßig zum Einsatz kommenden Braunkohlekraftwerks zeigt die Lausitz Energie Bergbau AG (Leag) unter https://www.lignoplus.de/data/DE/LignoPlus_Heizkraftwerke.pdf (aufgerufen am 23.10.2019).

Die Braunkohle ist nach wie vor ein wesentlicher Energieträger für den deutschen Wirtschaftsstandort. Als Grundlastkraftwerke konzipiert, weisen die Braunkohlenkraftwerke zwar eine hohe Verfügbarkeit und Wirtschaftlichkeit vor, zugleich geht jedoch von Braunkohle die höchste Klima- und Umweltbelastung der fossilen Brennstoffe aus.

Grundsätzlich ist eine ökologische und zugleich auch wirtschaftliche Energieversorgung für die Konkurrenzfähigkeit energieintensiver Branchen von zentraler Bedeutung und eine wesentliche Herausforderung der nächsten Jahre. Damit ergibt sich das Problem einer schlechten Umweltbilanz bei einer als unbefriedigend empfundenen Wirtschaftlichkeit und es ist die Aufgabe der vorliegenden Erfindung die Umweltbilanz einerseits und dabei die Wirtschaftlichkeit der (dezentralen) Energieerzeugung andererseits zu verbessern.

Das Problem wird durch ein Verfahren zur Herstellung einer Holzfeinfraktion für die Braunkohlensubstitution bei der Energiegewinnung nach Anspruch 1, einer Holzfeinfraktion nach Anspruch 10, sowie einem Verfahren zur Energiegewinnung nach Anspruch 15 gelöst.

Das Problem wird insbesondere durch ein Verfahren zur Herstellung einer Holzfeinfraktion für die Braunkohlensubstitution bei der Energiegewinnung gelöst, welches die Schritte eines Trocknen einer inhomogenen Holzschüttgutfraktion, eines Trennen der inhomogenen Holzschüttgutfraktion in eine Holzgrobgutfraktion und eine Holzfeinfraktion, eines Zerkleinern der Holzgrobgutfraktion, eines Rückführen der Holzgrobgutfraktion in den Trennungsschritt, sowie eines Bereitstellen der Holzfeinfraktion umfasst. Dies erlaubt ein Brennmaterial herzustellen, das Braunkohle in den zuvor beschriebenen (dezentralen) Braunkohleverbrennungsanlagen zur Energiegewinnung zu substituieren vermag. Als Sauberkeit der Verbrennung ist insbesondere zu verstehen, dass möglichst wenige schädliche und/oder umweltschädliche und/oder gesundheitsschädliche und/oder klimaschädliche Gase wie CO, $CO_2$, NOx und/oder schwefelhaltige Gase entstehen und/oder freigesetzt werden. Gleichzeitig oder alternativ kann darunter aber auch die Vollständigkeit einer Verbrennung verstanden werden, also insbesondere eine Verbrennung, bei der Kohlenwasserstoffverbindungen möglichst vollständig zu $CO_2$ verbrannt werden, insbesondere möglichst rückstandsfrei. Zusätzlich oder alternativ dazu kann sich die Sauberkeit auch auf einen geringeren Ascheanteil (in Gew-% und/oder in "Masse") beziehen.

Als Holzschüttgutfraktion ist in diesem Zusammenhang insbesondere zu verstehen eine Holzfraktion die aus insbesondere faserigem und/oder insbesondere körnigem Material besteht, welches als Rest und Abfallprodukt aus unbehandeltem Altholz entsteht. Dabei ist Altholz insbesondere im Sinne der Altholzverordnung AltholzV 2002-08 für die Bundesrepublik Deutschland zu verstehen. Dabei werden beispielsweise Obstkisten und/oder Euro-Industriepaletten zugeschnitten und/oder zerkleinert, etwa für die Spanplattenindustrie, oder andere Arbeitsschritte der Holzverarbeitung, wodurch die Holzschüttgutfraktion entsteht. Diese wird derzeit insbesondere als Abfallprodukt entsorgt und nicht mehr weiterverwendet. Damit ergibt sich der Vorteil, dass möglichst alle Bestandteile von Holz in einem holzverarbeitenden Betrieb verwendet werden, was die Ressourcen spart und damit zu einer positiven Energiebilanz beiträgt und wirtschaftlich vorteilhaft ist, da keine externen Brennstoffe wie fossile Brennstoffe, etwa Kohle zugekauft werden müssen. Die Fasern weisen insbesondere eine Länge von mehreren Millimetern ("mm") auf, insbesondere von 250 mm bis 50 mm, weiter insbesondere von 200 bis 100 mm auf und/oder die Körner weisen dabei insbesondere einen (maximalen) Durchmesser und/oder eine Länge von mehreren Millimetern ("mm") auf, insbesondere zwischen 0,01 mm und 15 mm, weiter insbesondere zwischen 0,2 mm und 10 mm, weiter insbesondere zwischen 0,5 mm und 2 mm, weiter insbesondere von 0,9 mm bis 1,1 mm. Insbesondere kann der Übergang zwischen Fasern und Körnern fließend sein. Beispielsweise können Fasern also eine Länge haben wie oben beschrieben und gleichzeitig einen Durchmesser wie in Bezug auf die Körner beschrieben. Alternativ oder gleichzeitig können die Körner auch elliptisch und/oder länglich sein, insbesondere reiskornförmig sein, müssen also insbesondere keine "perfekte" Kugelgeometrie erfüllen.

Weiter insbesondere gibt die folgende Tabelle eine Beispielübersicht über die verschiedenen Größenfraktionen in der Holzschüttgutfraktion, basierend auf einer Siebanalyse nach DIN 18 123, durchgeführt an 7 unabhängigen Chargen wieder. Die Trockensubstanz ist dabei nach DIN 52 183 ermittelbar. Für die oben offenbarten Prüfverfahren wurden insbesondere die Laborprobe nach DIN EN 15443 und die Prüfprobe nach DIN EN 15413 hergestellt. Wenn nicht anders angegeben, so beziehen sich die DIN - Normen immer auf die DIN-Norm, wie sie in einem Zeitraum vom 16. März 2020 bis 17. April 2020 Anwendung finden.

**Tabelle 1** Siebanalyse nach DIN 18 123

| | Größe in mm | Messwert in Gew-% der Trockensubstanz |
|---|---|---|
| **Charge 1** | 8 - 11 | 19,4 |
| | 5 -8 | 5,8 |
| | 4 -5 | 1,9 |
| | 3 -4 | 1,6 |
| | 2 - 3 | 5,9 |
| | 1 - 2 | 18,6 |
| | 0,7 - 1 | 2,4 |
| | 0,25 - 0,7 | 10,3 |
| | 0,125 - 0,25 | 10,6 |
| | 0,10 - 0,125 | 8,3 |
| | 0,063 - 0,10 | 7,50 |
| | < 0,063 | 7,78 |
| Charge 2 | > 8 mm | |
| | 5 mm - 8 mm | |
| | 4 mm - 5 mm | 77,3 |
| | 3 mm - 4 mm | |
| | 2 mm - 3 mm | |
| | 1 mm - 2 mm | 31,5 |
| | 0,5 mm - 1 mm | 20,2 |
| | 0,25 mm - 0,5 mm | 12,1 |
| | 0,125 mm - 0,25 mm | 5 |
| | 0,10 mm - 0,125 mm | 0,8 |
| | 0,063 mm - 0,10 mm | |
| | 0,20 mm - 0,063 mm | 0,1 |
| | 0,09 mm - 0,20 mm | |
| | < 0,090 mm | |
| Charge 3 | > 8 mm | 18,9 |
| | 5 mm - 8 mm | 22,5 |
| | 4 mm - 5 mm | 14,2 |
| | 3 mm - 4 mm | 13,3 |
| | 2 mm - 3 mm | 15,4 |
| | 1 mm - 2 mm | 10,6 |
| | 0,5 mm - 1 mm | 0,1 |
| | 0,25 mm - 0,5 mm | 2,5 |
| | 0,125 mm - 0,25 mm | 1,1 |
| | 0,10 mm - 0,125 mm | 0,2 |
| | 0,063 mm - 0,10 mm | 0,29 |
| | 0,20 mm - 0,063 mm | 0,78 |
| | 0,09 mm - 0,20 mm | |
| | < 0,090 mm | |
| Charge 4 | > 8 mm | 1,5 |
| | 5 mm - 8 mm | 3,2 |

(fortgesetzt)

| | Größe in mm | Messwert in Gew-% der Trockensubstanz |
|---|---|---|
| | 4 mm - 5 mm | 7,3 |
| | 3 mm - 4 mm | 9,7 |
| | 2 mm - 3 mm | 22,5 |
| | 1 mm - 2 mm | 27,7 |
| | 0,5 mm - 1 mm | 0,2 |
| | 0,25 mm - 0,5 mm | 10,5 |
| | 0,125 mm - 0,25 mm | 4,9 |
| | 0,10 mm - 0,125 mm | 2,7 |
| | 0,063 mm - 0,10 mm | 4,3 |
| | 0,20 mm - 0,063 mm | 5,47 |
| | 0,09 mm - 0,20 mm | |
| | < 0,090 mm | |
| Charge 5 | > 8 mm | |
| | 5 mm - 8 mm | 0 |
| | 4 mm - 5 mm | 0,3 |
| | 3 mm - 4 mm | 5,2 |
| | 2 mm - 3 mm | 12,6 |
| | 1 mm - 2 mm | 47,2 |
| | 0,5 mm - 1 mm | 19,3 |
| | 0,25 mm - 0,5 mm | 8,7 |
| | 0,125 mm - 0,25 mm | 2,9 |
| | 0,10 mm - 0,125 mm | 2,6 |
| | 0,063 mm - 0,10 mm | 1,2 |
| | 0,20 mm - 0,063 mm | 0 |
| | 0,09 mm - 0,20 mm | |
| | < 0,090 mm | |
| Charge 6 | > 8 mm | |
| | 5 mm - 8 mm | 2,2 |
| | 4 mm - 5 mm | 10,6 |
| | 3 mm - 4 mm | 25,6 |
| | 2 mm - 3 mm | 28,7 |
| | 1 mm - 2 mm | 18,6 |
| | 0,5 mm - 1 mm | 8,7 |
| | 0,25 mm - 0,5 mm | 2,6 |
| | 0,125 mm - 0,25 mm | 1,4 |
| | 0,10 mm - 0,125 mm | 0,9 |
| | 0,063 mm - 0,10 mm | 0,6 |
| | 0,20 mm - 0,063 mm | 0,1 |
| | 0,09 mm - 0,20 mm | |
| | < 0,090 mm | |
| Charge 7 | > 8 mm | |
| | 5 mm - 8 mm | 0 |
| | 4 mm - 5 mm | 3,2 |
| | 3 mm - 4 mm | 12,6 |
| | 2 mm - 3 mm | 18,9 |
| | 1 mm - 2 mm | 33,2 |
| 0,5 mm - 1 mm | | 17,6 |
| 0,25 mm - 0,5 mm | | 10,3 |
| 0,125 mm - 0,25 mm | | 1,6 |
| 0,10 mm - 0,125 mm | | 1,5 |

(fortgesetzt)

| Größe in mm | Messwert in Gew-% der Trockensubstanz |
| --- | --- |
| 0,063 mm - 0,10 mm | 1 |
| 0,20 mm - 0,063 mm | 0,1 |
| 0,09 mm - 0,20 mm | - |
| < 0,090 mm | |

In den in der Beschreibung dargestellten Tabellen steht das "-" Zeichen insbesondere dafür, dass die entsprechend aufgeführten Messmethoden zu einem nicht quantifizierbaren Ergebnis geführt haben, also insbesondere dafür, dass die entsprechenden Werte unterhalb einer gewissen Nachweisgrenze und/oder Sensitivität der Methode lagen. Insbesondere sind diese Werte also nicht mit einer "0" gleichzusetzen.

Als inhomogen ist dabei insbesondere zu verstehen, dass es sich bei der Holzschüttgutfraktion nicht um einen homogenen, d.h. kontrollierten Mix aus Durchmessern oder Längen handelt, sondern die Verteilung der Durchmesser und/oder Längen der darin enthaltenen Fasern, Körner und/oder Partikel einer Zufallsverteilung unterliegen und damit auch einer zufälligen Verteilungsstatistik (Poissonverteilung, Gaussverteilung). Diese Verteilung ist insbesondere von den Verfahren und/oder den Methoden abhängig, bei denen die inhomogene Holzschüttgutfraktion entsteht.

Das Trennen kann insbesondere auf Methoden basieren, die etwa auf Grund des Durchmessers und/oder der Länge der Fasern und/oder Partikel und/oder der Körner trennen, insbesondere eines Siebverfahrens. Des Weiteren oder alternativ kann eine Methode zum Einsatz kommen, die auf Grund der unterschiedlichen Dichte von Partikeln und/oder Fasern und/oder Körnern diese voneinander trennt. Weiter insbesondere kann eine Kombination der verschiedenen Verfahren zum Einsatz kommen. Dadurch kann insbesondere verhindert werden, dass übereinandergelagerte Fasern einen etwaigen zum Einsatz kommenden Siebeschritt verfälschen, indem die Fasern an sich eine Art Netz bilden und damit das Ergebnis verfälschen und/oder Material zurückhalten und/oder zu einem Verstopfen und/oder Beschädigen der Filter und/oder der Siebe führen.

Weiter insbesondere umfasst die Holzgrobgutfraktion die abgetrennten Fasern und/oder Partikel und/oder Körner die einen minimalen Durchmesser und/oder Länge von insbesondere 2 mm, weiter insbesondere von 1 mm überschreiten. Weiter insbesondere handelt es sich bei der Holzgrobgutfraktion ebenfalls um eine gewisse inhomogene Größen- und/oder Längenverteilung der darin enthaltenen Holzbestandteile, basierend auf dem gewählten Trennungsverfahren und insbesondere den mit dem Trennungsverfahren verbundenen "Cut-off", also insbesondere der Größen- und/oder Längen- und/oder Dicken- und/oder Durchmesserdurchlassvermögen der Trennungsmethode in die Holzfeinfraktion. Dieser "Cut-off" kann entsprechend durch die Wahl der Siebparameter und/oder Filterparameter flexibel je nach Bedarf gewählt werden.

Weiter insbesondere kann die Holzgrobgutfraktion einem Zerkleinerungsschritt, insbesondere einem Mühlschritt zugeführt werden. Dies kann entweder sofort geschehen oder insbesondere kann die Holzgrobgutfraktion zwischengelagert werden, um sie insbesondere bedarfsangepasst dem Zerkleinerungsschritt zuzuführen.

Weiter insbesondere kann die Holzfeinfraktion bereitgestellt werden. "Bereitstellen" kann dabei ein Lagern sein oder ein direktes Überführen in einen Verbrennungsschritt zur Energiegewinnung, insbesondere in einer eingangs beschriebenen Braunkohleverbrennungsanlage. Insbesondere kann die Holzfeinfraktion direkt aus einem Altholzverarbeitungsschritt entstehen und/oder die Holzfeinfraktion kann einen Schleifstaub umfassen, weiter insbesondere kann die Holzfeinfraktion aus einem Schleifstaub gebildet sein, weiter insbesondere kann es sich bei der Holzfeinfraktion auch um anfallende Reste aus der allgemeinen Holzverarbeitung handeln, beispielsweise kann es sich bei diesen Resten um Späne und/oder um Abschnitte von Zuschnitten und/oder um vergleichbare Reste handeln.

Die Holzfeinfraktion hat dabei insbesondere den Vorteil, dass ihre Zusammensetzung entsprechend definiert ist und dabei ihre Verbrennung in traditionell verwendeten Braunkohleverbrennungsanlagen für die Energiegewinnung sauberer ist, als die Verbrennung von Braunkohlestaub, insbesondere emissionsärmer ist, weiter insbesondere sich durch eine Reduktion des Ascheanteils (in Gew-%, alternativ oder zusätzlich in "Masse") auszeichnet, verglichen mit einer Verbrennung von Braunkohlestaub in derselben / einer baugleichen Anlage. Insbesondere kann somit auf die konventionellen Braunkohleverbrennungsanlagen zurückgegriffen werden, ohne dabei größere Umrüstungen an den Anlagen vornehmen zu müssen. Damit ist das Verfahren leicht zu implementieren, nachhaltig und somit ressourcensparend.

Die folgenden Werte können insbesondere bei der Verbrennung von Braunkohlestaub im Vergleich zu insbesondere Holzstaub, insbesondere in Form einer Holzfeinfraktion, erzielt werden.

**Tabelle 2**

| Parameter | | Braunkohlenstaub | Holzstaub |
|---|---|---|---|
| Heizwert | MJ/kg | 21,0 | 15,2 |
| Dichte | kg/dm$^3$ | 0,5 - 0,55 | 0,25 |
| mind. Luftbedarf | Nm$^3$/kg | 5,6 | 3,9 |
| Asche | % | 6,6 | 4,6 |

(Prinzipiell wird auf das SI-Einheitensystem und entsprechende Einheitenkürzel Bezug genommen und es kann auch auf die folgenden Einheitenkürzel Bezug genommen werden: "t" = "Tonne"; "h" = "Stunde"; "a" = "Jahr"; "kJ" = "Kilojoule", "MJ" = "Megajoule"; "mg" = "Milligramm"; "kg" = "Kilogramm"; "Nm$^3$" = "Normkubikmeter"; "dm$^3$" = "Kubikdezimeter"; "Vol-%" = "Volumenprozent (insbesondere zu einem Normvolumen, insbesondere Nm$^3$)"; "Gew-%" = "Gewichtsprozent (insbesondere in Bezug auf zwei Normvolumen, insbesondere Nm$^3$)")

Nach einem weiteren Aspekt der Erfindung wird das Problem des Weiteren insbesondere dadurch gelöst, dass der Feuchtigkeitsgehalt der inhomogenen Holzschüttgutfraktion beim Trocknen auf einen Wert kleiner als 12 Gew-%, weiter insbesondere kleiner als 11 Gew-%, bevorzugt insbesondere kleiner als 10 Gew-% (0 Gew-% eingeschlossen), insbesondere zwischen 9 und 1 Gew-%, weiter insbesondere auf einen Wert zwischen 8 und 2 Gew-%, weiter insbesondere auf einen Wert zwischen 7 und 4 Gew-% reduziert wird. Dies verbessert die Verbrennungseigenschaften, insbesondere die Sauberkeit der Verbrennung. Insbesondere sind Werte größer als 10 Gew-% (und insbesondere kleiner als 12 Gew-% oder insbesondere kleiner als 11 Gew-%) mit einer reduzierten Ausbeute in einem Mahlprozess verbunden. Insbesondere können diese Werte also tolerierbar sein, wenn die Menge an Holzmaterial für die Zuführung in diesen Mahlschritt nicht limitierend ist.

Insbesondere kann die Feuchtemessung mittels gravimetrischer Methoden, insbesondere Trockenschrank und/oder Vakuumtrockenschrank für temperaturempfindliche Feststoffe und/oder Infrarotwaagen und/oder chemische Methoden, z.B. Karl - Fischer - Titration erfolgen.

Nach einem weiteren Aspekt der Erfindung wird das Problem des Weiteren insbesondere dadurch gelöst, dass die inhomogene Holzschüttgutfraktion Altholz der Kategorie AI und/oder AII gemäß der Altholzverordnung AltholzV 2002-08 ist und/oder wobei die inhomogene Holzschüttgutfraktion Altholz der Kategorie AIII und/oder AIV gemäß der Altholzverordnung AltholzV 2002-08 ist, für ein Verfahren zur Energiegewinnung mit erhöhtem Immissionsschutz. Dadurch ist insbesondere die Sauberkeit der Verbrennung verbessert.

Weiter insbesondere ist der Ligninanteil in Altholz reduziert, weiter insbesondere zwischen 20 - 30 % gegenüber frisch geschlagenem Holz der gleichen Art, weiter insbesondere um 35 - 40 % reduziert im Vergleich zu frisch geschlagenem Holz der gleichen Art. Darüber hinaus ist insbesondere das Altholz frei von organischen Zusatzstoffen, wie insbesondere Lacken, insbesondere chemischen Harzen aus der Holzverarbeitung, weiter insbesondere Farben mit metallischen Komponenten und/oder Holzschutzmitteln.

Zur Verwertung von Altholz der Kategorie AI und/oder AII zur Herstellung der Holzfeinfraktion kann in einem nachgeschalteten Verfahren zur Energiegewinnung durch Verbrennung der Holzfeinfraktion ein Immissionsschutz vorgesehen sein, der dem Standard der "Verordnung über mittelgroße Feuerungs- Gasturbinen- und Verbrennungsmotoranlagen vom 13. Juni 2019 (BGBl. I S. 804)", der sogenannten 44. Bundesimmissionsschutzverordnung (BImSchV), wie ausgefertigt am 13. Juni 2019, entspricht und/oder die den Vorgaben der Richtlinie (EU) 2015/2193 des Europäischen Parlaments und des Rates vom 25. November 2015 zur Begrenzung der Emissionen bestimmter Schadstoffe aus mittelgroßen Feuerungsanlagen in die Luft (ABl. L 313 vom 28.11.2015, S. 1) entspricht. Dabei richten sich die Grenzwerte beispielsweise nach den in der folgenden Tabelle gezeigten (gemäß Anhang 1 der 4. BImSchV) für Verbrennungsanlagen mit einer Leistung < 50 MW ("Megawatt").

**Tabelle 3 Tagesmittelwerte**

| | |
|---|---|
| Gesamtstaub [mg/m$^3$] | 10 / konti |
| CO [mg/m$^3$] | **220 / konti** |
| NOx [mg/m$^3$] | **200 / jährlich** |
| Gesamt C [mg/m$^3$] | 10 / alle 3 Jahre |
| Ammoniak [mg/m$^3$] | **30 / Jährlich** |
| Bezug O$_2$ [Vol %] | 6 / konti |
| Quecksilber [mg/m$^3$] | - |

(fortgesetzt)

| | |
|---|---|
| Schwefeldioxid [mg/m³] | - |
| Vorgeschriebene Verbrennungstemperatur | - |
| Chlorwasserstoff [mg/m³] | - |
| Flurwasserstoff [mg/m³] | - |

Hier bezieht sich insbesondere "jährlich", "alle 3 Jahre" und "konti" auf den jeweils vorgeschriebenen Messturnus. Dabei steht "konti" für "kontinuierlich zu überwachenden Emissionsgrenzwert" (Tagesmittelwert und Halbstundenmittelwert). Insbesondere die gestrichenen Teile der Tabelle ("-") unterliegen keinen besonderen Anforderungen durch die Vorschriften. Diese können also freier gewählt werden.

Alternativ kann auch Altholz der Kategorie AIII und/oder AIV (dann auch beliebig mischbar mit Altholz der Kategorie AI und/oder AII) zur Herstellung einer Holzfeinfraktion gewählt werden, wenn in einem Verfahren für die Energieerzeugung ein erhöhter Immissionsschutz gewährleistet ist. Insbesondere entspricht der Immissionsschutz in einem solchen Fall den Grenzwerten der "Verordnung über die Verbrennung und die Mitverbrennung von Abfällen vom 2. Mai 2013 (BGBl. I S. 1021, 1044, 3754)", der sogenannten 17. Bundesimmissionsschutzverordnung (BImSchV), wie ausgefertigt am 02. Mai 2013, wie beispielsweise in der folgenden Tabelle gezeigt (gemäß Anhang 1 der 4. BImSchV) für Verbrennungsanlagen mit einer Leistung < 50 MW ("Megawatt").

**Tabelle 4 Tagesmittelwerte**

| | |
|---|---|
| Gesamtstaub [mg/m³] | 10 / konti |
| CO [mg/m³] | 50 / konti |
| NOx [mg/m³] | 200 / konti |
| Gesamt C [mg/m³] | 10 / konti |
| Ammoniak [mg/m³] | 10 / konti |
| Bezug $O_2$ [Vol %] | 11 / konti |
| Quecksilber [mg/m³] | 0,03 / konti |
| Schwefeldioxid [mg/m³] | 50 / konti |
| Vorgeschriebene Verbrennungstemperatur | 850°C / konti |
| Chlorwasserstoff [mg/m³] | 10 / konti |
| Flurwasserstoff [mg/m³] | 1 / konti |
| **Jahresmittelwerte** | |
| Quecksilber [mg/m³] | 0,01 / konti |
| NOx [mg/m³] | 100 / konti |

Dabei steht "konti" für "kontinuierlich zu überwachenden Emissionsgrenzwert" (Tagesmittelwert und Halbstundenmittelwert).

Insbesondere kann also die Wahl der Altholzkategorie AI und/oder AII und/oder AIII und/oder AIV und/oder einer Mischung solcher Althölzer für die Herstellung einer Holzfeinfraktion davon abhängen, welcher Immissionsschutz bei einem nachgeschalteten Verfahren zur Energiegewinnung implementiert werden kann.

Nach einem weiteren Aspekt der Erfindung wird das Problem des Weiteren insbesondere dadurch gelöst, dass das Trocknen eine Kontakttrocknung, insbesondere durch eine Schnecken- bzw. Trommelkonstruktion und/oder Bandtrocknung ist und/oder durch das Einsetzen von niedertemperiertem Wasserdampf als Wärmemedium erfolgt und/oder durch Einsetzen von warmem/heißem Wasser erfolgt. Dies verbessert die Trocknung und damit die Energieeffizienz des Verfahrens.

Dabei ist insbesondere unter "niedertemperiert" eine Temperaturspanne von 5 °C bis 19 °C zu verstehen. "Warm" bezieht sich hier insbesondere auf eine Temperaturspanne von 20 °C bis 49°C, weiter insbesondere bezieht sich "heiß" hier auf eine Temperaturspanne von 50 °C bis 98 °C.

Dabei ist unter Kontakttrocknung insbesondere zu verstehen, dass die erforderliche Wärme durch den Kontakt der feuchten Holzschüttgutfraktion mit heißen Flächen bewirkt. Insbesondere wird, um eine möglichst gute Wärmeübertragung zu gewährleisten der Feststoff in Kontakttrocknern mehr oder weniger intensiv gemischt, so dass insbesondere immer wieder feuchtes, kühleres Produkt an die Kontaktfläche gebracht wird. Die übertragene Wärmemenge wird insbesondere wie folgt berechnet:

$$Q = k * A * (Theiz - Tprod) * t$$

mit

Q - übertragene Wärmeenergie in kJ

k - Wärmeübergangskoeffizient in W / (m^2 * K), z.B. 50 W / (m^2 * K) als typischer Wert für Schaufeltrockner

A - Wärmeübertragungsfläche

Theiz - Wandtemperatur der Heizfläche

Tprod - Produkttemperatur

t - Kontaktzeit

Die über die Heizfläche übertragbare Leistung in kW berechnet sich, indem obige Gleichung durch die Kontaktzeit t dividiert wird.

Insbesondere kann auch die konvektive Trocknung unter Verwendung von niedertemperiertem Wasserdampf, also insbesondere ohne Verwendung von überhitztem Wasserdampf einer Heißdampftrocknung, erfolgen. Weiter insbesondere findet die Trocknung kontinuierlich, also nicht ladungsweise (Batch-Verfahren) statt. Die inhomogene Holzschüttgutfraktion kann als Mischung feuchter Feststoffe mit Partikelgrößen im Bereich von mehreren hundert Mikrometern bis zu wenigen Millimetern insbesondere in Wirbelschichttrocknern bei intensiven Kontakt mit dem Trocknungsgas getrocknet werden. Weiter insbesondere kann die Holzschüttgutfraktion in Drehrohrtrocknern oder auf Karusselltrocknern verarbeitet werden, da sie nicht klebt und krustet.

Insbesondere erfolgt die Trocknung im Rahmen von wenigen Minuten, insbesondere von mehr als 5 Minuten, weiter insbesondere von mehr als 10 min, weiter insbesondere im Rahmen von 30 min für ein Kilogramm ("kg") Holzschüttgut, weiter insbesondere pro 100 kg, aber insbesondere von weniger als einer Stunde pro Kilogramm, weiter insbesondere pro 100 kg.

Nach einem weiteren Aspekt der Erfindung wird das Problem des Weiteren insbesondere dadurch gelöst, dass dem Trennen der inhomogenen Holzschüttgutfraktion in die Holzgrobgutfraktion und die Holzfeinfraktion ein Entfernen von Störstoffen vorangeht. Dies verbessert die Verbrennung und kann den Verschleiß einer Mühle verringern.

Nach einem weiteren Aspekt der Erfindung wird das Problem des Weiteren insbesondere dadurch gelöst, dass das Entfernen von Störstoffen ein Entfernen von nichtholzigen Stoffen und/oder von eisenhaltigen Störstoffen und/oder von nichteisenhaltigen, metallischen Störstoffen und/oder ein Entfernen von nichtmetallischen Störstoffen umfasst. Dies verbessert die Verbrennung und kann den Verschleiß einer Mühle verringern.

Als Störstoffe können insbesondere nichtholzige Rückstände, Plastikrückstände (im Falle von Altholz der Kategorie AIII und/oder AIV) und/oder Eisenpartikel und/oder Nichteisenmetallpartikel auftreten. Des Weiteren können Steinchen, insbesondere (Kiesel-)Steine Störstoffe sein. Insbesondere Eisenpartikel und/oder eisenhaltige Störstoffe können durch Permanentmagneten aussortiert werden. Nichteisenmetalle oder Nichteisenmetallpartikel können durch ein Induktionsfeld aussortiert werden, indem insbesondere temporär magnetische Eigenschaften aufgeprägt werden. Insbesondere nichtmetallische Störstoffe können basierend auf Verfahren der Trennung basierend auf Dichteunterschieden abgesondert werden.

Nach einem weiteren Aspekt der Erfindung wird das Problem des Weiteren insbesondere dadurch gelöst, dass das Zerkleinern der Holzgrobgutfraktion ein Mahlen ist und/oder wobei die Holzfeinfraktion direkt aus einem (Alt-)Holzverarbeitungsschritt entsteht und/oder wobei die Holzfeinfraktion einen Schleifstaub umfasst und/oder wobei die Holzfeinfraktion anfallende Reste aus der allgemeinen Holzverarbeitung umfasst. Dies verbessert die Zerkleinerung und verbessert die Homogenität der Feingutfraktion. Insbesondere können Kugelmühlen und/oder Kegelmühlen eingesetzt werden zum Mahlen. Beispielsweise kann es sich bei diesen Resten um Späne und/oder um Abschnitte von Zuschnitten und/oder um vergleichbare Reste handeln, wie zuvor schon ausgeführt. Für eine allgemeine Definition zur Holzfeinfraktion wird auf die obenstehenden Ausführungen verwiesen.

Nach einem weiteren Aspekt der Erfindung wird das Problem des Weiteren insbesondere dadurch gelöst, dass das Trennen der inhomogenen Holzschüttgutfraktion ein Sieben ist. Dies verbessert die Homogenität der Holzfeinfraktion.

Insbesondere sind mindestens 2 Siebeschritte hintereinandergeschaltet. Insbesondere können 4 verschiedene Siebe, weiter insbesondere 6 verschiedene Siebe eingesetzt werden, um die Größentrennung durchzuführen. Insbesondere können die Siebe und/oder die Siebschritte hintereinandergeschaltet werden.

Nach einem weiteren Aspekt der Erfindung wird das Problem des Weiteren insbesondere durch ein Verfahren gelöst, wodurch eine Holzfeinfraktion bereitgestellt wird, bei der mehr als 50 Gew-% der Körner kleiner als 1 mm sind, weiter mehr als 65 Gew-% der Körner kleiner als 1 mm sind, weiter insbesondere mehr als 80 Gew-% der Körner kleiner als 1 mm sind, weiter insbesondere zwischen 65 Gew-% - 99 Gew-% der Körner kleiner als 1 mm sind und/oder bei der zwischen 30 bis 85 Gew-% der Körner einen Durchmesser zwischen 0,125 und 0,5 mm haben, insbesondere bei der zwischen 40 und 80 Gew-% der Körner einen Durchmesser zwischen 0,125 und 0,5 mm haben. Dies verbessert die Homogenität der Holzfeinfraktion und die Förderbarkeit der Holzfeinfraktion in der Braunkohleverbrennungsanlage.

Nach einem unabhängigen Aspekt der Erfindung wird das Problem des Weiteren durch eine Holzfeinfraktion gelöst wobei mehr als 50 Gew-% der Körner kleiner als 1 mm sind, weiter mehr als 65 Gew-% der Körner kleiner als 1 mm sind, weiter insbesondere mehr als 80 Gew-% der Körner kleiner als 1 mm sind, weiter insbesondere zwischen 65 Gew-% - 99 Gew-% der Körner kleiner als 1 mm sind und/oder bei der zwischen 30 bis 85 Gew-% der Körner einen Durchmesser zwischen 0,125 und 0,5 mm haben, insbesondere bei der zwischen 40 und 80 Gew-% der Körner einen Durchmesser zwischen 0,125 und 0,5 mm haben. Dies verbessert die Homogenität der Holzfeinfraktion und die Förderbarkeit der Holzfeinfraktion in der Braunkohleverbrennungsanlage.

Weiter insbesondere gibt die folgende Tabelle eine Beispielübersicht über die verschiedenen Größenfraktionen in der Holzfeinfraktion, basierend auf einer Siebanalyse nach DIN 18 123, durchgeführt an 3 unabhängigen Chargen wieder. Hier entspricht insbesondere die Chargennummer nicht der Chargennummer der Holzschüttgutfraktion.

**Tabelle 5** Siebanalyse nach DIN 18 123

|  | Größe in mm | Messwert in Gew-% der Trockensubstanz |
|---|---|---|
| **Charge 1** | > 8 mm | |
| | 5 mm - 8 mm | 0 |
| | 4mm - 5 mm | 0 |
| | 3 mm - 4 mm | 0 |
| | 2mm - 3mm | 0 |
| | 1 mm - 2 mm | 0 |
| | 0,5 mm - 1 mm | 11,3 |
| | 0,25 mm - 0,5 mm | 58 |
| | 0,125 mm - 0,25 mm | 16,5 |
| | 0,10 mm - 0,125 mm | 9,4 |
| | 0,063 mm - 0,10 mm | 4,2 |
| | 0,20 mm - 0,063 mm | 0,6 |
| | 0,09 mm - 0,20 mm | |
| | < 0,090 mm | |
| **Charge 2** | > 8 mm | |
| | 5 mm - 8 mm | 0 |
| | 4mm - 5 mm | 0 |
| | 3 mm - 4 mm | 0 |
| | 2 mm - 3 mm | 0,1 |
| | 1 mm - 2 mm | 29,6 |
| | 0,5 mm - 1 mm | 55,1 |
| | 0,25 mm - 0,5 mm | 12,4 |
| | 0,125 mm - 0,25 mm | 1,7 |
| | 0,10 mm - 0,125 mm | 0,7 |
| | 0,063 mm - 0,10 mm | 0,2 |
| | 0,20 mm - 0,063 mm | 0,1 |
| | 0,09 mm - 0,20 mm | - |
| | < 0,090 mm | - |
| **Charge 3** | > 8 mm | - |
| | 5mm - 8mm | 0 |
| | 4mm - 5 mm | 0 |
| | 3 mm - 4 mm | 0 |
| | 2 mm - 3 mm | 0,1 |
| | 1 mm - 2 mm | 1,8 |
| | 0,5 mm - 1 mm | 43,5 |

(fortgesetzt)

| Größe in mm | Messwert in Gew-% der Trockensubstanz |
|---|---|
| 0,25 mm - 0,5 mm | 42,5 |
| 0,125 mm - 0,25 mm | 7,7 |
| 0,10 mm - 0,125 mm | 1,1 |
| 0,063 mm - 0,10 mm | 2,7 |
| 0,20 mm - 0,063 mm | 0,5 |
| 0,09 mm - 0,20 mm | - |
| < 0,090 mm | - |

Insbesondere wird der Durchmesser durch den Durchgang einer entsprechenden Fraktion durch Siebe mit der jeweiligen Porengröße definiert. Insbesondere ist der Durchmesser ein Maximaldurchmesser, weiter insbesondere ein Durchschnittsdurchmesser. Weiter insbesondere richtet sich die Größenverteilung nach einer der Tabellen 1 bis 3 oder einer Kombination davon. Dazu wurden Testproben aus der Holzfeinfraktion entnommen und durch insgesamt 9 Siebe mit absteigenden Ausschlussgrößen gesiebt, die jeweiligen Massen gewogen und daraus die entsprechenden Durchgang-Gew-% ermittelt. Dies kann entsprechend den in den folgenden Tabellen dargestellten Siebung erfolgen. Der Überstand kann insbesondere die Holzgrobgutfraktion bilden, während die Fraktion die das Sieb der gewünschten Größe passieren kann die Holzfeinfraktion bilden kann.

**Tabelle 6**

| | | | | | |
|---|---|---|---|---|---|
| Einfüllbecher + Holzmasse insgesamt (in Gramm): | | | | 228,98 | |
| Masse Einfüllbecher nach einfüllen (in Gramm): | | | | 172,07 | |
| Masse Holzstaub (8in Gramm): | | | | 56,91 | |
| Durchlaufzeit: | | 12min | | | |
| Amplitute: | | 1,60mm | | | |
| Sieb Nr. | Durchmesser /mm | Siebmasse /g | Holzmasse /g | Rückstand /Gew.-% | Durchgang /Gew.-% |
| 1 | 2,80 | 416,12 | 0,02 | 0,04 | 99,96 |
| 2 | 2,00 | 390,6 | 0,10 | 0,18 | 99,79 |
| 3 | 1,40 | 369,95 | 0,09 | 0,16 | 99,63 |
| 4 | 1,00 | 362,22 | 0,50 | 0,88 | 98,75 |
| 5 | 0,50 | 333,99 | 15,89 | 27,92 | 70,83 |
| 6 | 0,25 | 310,51 | 20,54 | 36,09 | 34,74 |
| 7 | 0,125 | 291,27 | 11,67 | 20,51 | 14,23 |
| 8 | 0,090 | 272,3 | 2,81 | 4,94 | 9,30 |
| 9 | <0,090 | 246,08 | 5,28 | 9,28 | 0,02 |
| Gesamt | | | 56,90 | 99,98 | |
| Verlust | | | 0,01 | 0,02 | |

**Tabelle 7**

| | | | | | |
|---|---|---|---|---|---|
| Einfüllbecher + Holzmasse insgesamt (in Gramm): | | | | 328,78 | |
| Masse Einfüllbecher nach einfüllen (in Gramm): | | | | 171,95 | |
| Masse Holzstaub (in Gramm): | | | | 156,83 | |
| Durchlaufzeit: | | 20min | | | |
| Amplitute: | | 1,60mm | | | |
| Sieb Nr. | Durchmesser /mm | Siebmasse /g | Holzmasse /g | Rückstand /Gew.-% | Durchgang /Gew.-% |
| 1 | 2,80 | 416,16 | 0,06 | 0,04 | 99,96 |
| 2 | 2,00 | 390,57 | 0,07 | 0,04 | 99,92 |
| 3 | 1,40 | 369,98 | 0,12 | 0,08 | 99,84 |
| 4 | 1,00 | 362,98 | 1,26 | 0,80 | 99,04 |
| 5 | 0,50 | 373,41 | 55,31 | 35,27 | 63,77 |
| 6 | 0,25 | 343,7 | 53,73 | 34,26 | 29,51 |

(fortgesetzt)

| Sieb Nr. | Durchmesser /mm | Siebmasse /g | Holzmasse /g | Rückstand /Gew.-% | Durchgang /Gew.-% |
|---|---|---|---|---|---|
| 7 | 0,125 | 307,12 | 27,52 | 17,55 | 11,96 |
| 8 | 0,090 | 275,17 | 5,68 | 3,62 | 8,34 |
| 9 | <0,090 | 253,85 | 13,05 | 8,32 | 0,02 |
| Gesamt | | | 156,80 | 99,98 | |
| Verlust | | | 0,03 | 0,02 | |

**Tabelle 8**

| Einfüllbecher + Holzmasse insgesamt (in Gramm): | | | | 381,97 | |
|---|---|---|---|---|---|
| Masse Einfüllbecher nach einfüllen (in Gramm): | | | | 172,02 | |
| Masse Holzstaub (8in Gramm): | | | | 209,95 | |
| Durchlaufzeit: | | 12min | | | |
| Amplitute: | | 1,60mm | | | |

| Sieb Nr. | Durchmesser /mm | Siebmasse /g | Holzmasse /g | Rückstand /Gew.-% | Durchgang /Gew.-% |
|---|---|---|---|---|---|
| 1 | 1,40 | 370 | 0,14 | 0,07 | 99,93 |
| 2 | 1,00 | 364,03 | 2,31 | 1,10 | 98,83 |
| 3 | 0,50 | 411,01 | 92,91 | 44,25 | 54,58 |
| 4 | 0,25 | 351,45 | 61,48 | 29,28 | 25,30 |
| 5 | 0,125 | 310,6 | 31,00 | 14,77 | 10,53 |
| 6 | 0,090 | 275,53 | 6,04 | 2,88 | 7,65 |
| 7 | 0,063 | 275,83 | 6,46 | 3,08 | 4,58 |
| 8 | 0,045 | 267,21 | 4,84 | 2,31 | 2,27 |
| 9 | <0,045 | 245,53 | 4,73 | 2,25 | 0,02 |
| Gesamt | | | 209,91 | 99,98 | |
| Verlust | | | 0,04 | 0,02 | |

Nach einem weiteren Aspekt der Erfindung wird das Problem des Weiteren insbesondere dadurch gelöst, dass die Holzfeinfraktion einen Feuchtigkeitsgehalt kleiner als 10 Gew-% (0 Gew-% eingeschlossen), insbesondere zwischen 9 und 1 Gew-%, weiter insbesondere einen Wert zwischen 8 und 2 Gew-%, weiter insbesondere einen Wert zwischen 7 und 4 Gew-% aufweist. Dies verbessert die Verbrennungseigenschaften, insbesondere die Sauberkeit der Verbrennung.

Nach einem weiteren Aspekt der Erfindung wird das Problem des Weiteren insbesondere dadurch gelöst, dass die Holzfeinfraktion eine insbesondere nach Altholzverordnung AltholzV 2002-08 ermittelbare Gewichtsanteilssumme der polychlorierten Biphenyle 18, 52, 101, 138, 153 und/oder 180 zwischen 0,4 und 0,5 mg / kg, insbesondere zwischen 0,3 und 0,39 mg, weiter insbesondere kleiner als 0,32 mg / kg (ausgenommen 0 mg / kg) aufweist und/oder die Gesamtgewichtsanteilssumme aller polychlorierten Biphenyle kleiner als 10 mg / kg, insbesondere kleiner als 2,5 mg / kg, weiter insbesondere kleiner als 2 mg / kg, noch weiter insbesondere kleiner als 1,7 mg / kg ist. Dies verbessert die Sauberkeit der Verbrennung.

Weiter insbesondere kann aber auch alternativ zu den hier aufgeführten Werten eine Holzfeinfraktion hergestellt werden aus Altholz der Kategorie AIII und AIV der Altholzverordnung AltholzV 2002-08, wenn ein entsprechender Immissionsschutz bei einem Verbrennungsverfahren zur Energieerzeugung aus der Holzfeinfraktion erhöht wird. Diesbezüglich wird auf die bisherigen Ausführungen verwiesen.

Nach einem weiteren Aspekt der Erfindung wird das Problem des Weiteren insbesondere dadurch gelöst, dass die Holzfeinfraktion eine nach DIN 51705 2001-06 ermittelbare Schüttdichte zwischen 100 kg/m³ und 400 kg/m³, insbesondere zwischen 150 kg/m³ und 350 kg/m³, weiter insbesondere zwischen 220 kg/m³ und 320 kg/m³ aufweist und/oder wobei die Holzfeinfraktion eine Stampfdichte von 200 kg/m³ und 600 kg/m³, insbesondere von 250 kg/m³ und 550 kg/m³, weiter insbesondere von 350 kg/m³ und 500 kg/m³ aufweist.. Dies verbessert insbesondere die Förderbarkeit der Holzfeinfraktion in den Braunkohleverbrennungsanlagen.

Nach einem weiteren Aspekt der Erfindung wird das Problem des Weiteren insbesondere dadurch gelöst, dass die Holzfeinfraktion eine nach DIN ESO 17294-2 2005-02 ermittelbaren Kupferanteil (bezogen auf die Trockensubstanz) von kleiner 50 mg / kg aufweist, weiter insbesondere kleiner als 40 mg / kg aufweist, weiter insbesondere einen Kupferanteil aufweist, der kleiner 10 mg/kg sein kann, weiter insbesondere zwischen 1 bis 5 mg /kg liegt, weiter insbesondere zwischen 2 bis 3 mg / kg liegt. Dies verbessert die Sauberkeit der Verbrennung und reduziert die Schadensgefahr für die Verbrennungs- und Förderanlagen.

Das Problem wird des Weiteren durch ein erfindungsgemäßes Verfahren zur Energiegewinnung gelöst, wobei das Verfahren insbesondere ein Verbrennen der Holzfeinfraktion nach einem der Ansprüche 10 bis 14 in einer Braunkohleverbrennungsanlage umfasst. Dies verbessert die Sauberkeit der Verbrennung.

Dabei entsteht insbesondere eine Aschefraktion, die durch die Werte der folgenden Tabelle charakterisierbar ist. Dabei steht TS für Trockensubstanz. Die jeweilige DIN-Norm bezieht sich auf ihre im April 2020 gültige Version.

Der Aschegehalt ist dabei insbesondere nach DIN 52 183 ermittelbar, wie sie im April 2020 Anwendung findet. Insbesondere liegt der Aschegehalt zwischen 1 bis 5 Gew-% der Trockensubstanz, weiter insbesondere zwischen 1,5 und 3 Gew-% der Trockensubstanz.

**Tabelle 9: Untersuchung aus der Asche**

| Element | Anteil TS in mg / kg | DIN - Norm der Bestimmung |
|---|---|---|
| Antimon | 0,1 - 0,3 | DIN EN ISO 11885 |
| Arsen | 0,3 - 0,5 | DIN EN ISO 11885 |
| Blei | 2 - 4 | DIN EN ISO 11885 |
| Bor | 9 - 12 | DIN EN ISO 11885 |
| Cadmium | 0,1 - 0,3 | DIN EN ISO 11885 |
| Chrom | 0,7 - 0,9 | DIN EN ISO 11885 |
| Kobalt | < 0,5 | DIN EN ISO 11885 |
| Kupfer | 2 - 3 | DIN EN ISO 11885 |
| Mangan | 90 - 120 | DIN EN ISO 11885 |
| Nickel | 0,3 - 0,6 | DIN EN ISO 11885 |
| Thallium | < 0,25 | DIN EN ISO 11885 |
| Quecksilber | < 0,02 | EN ISO 1483 |
| Vanadium | < 0,25 | DIN EN ISO 11885 |
| Zinn | 0,15 - 0,3 | DIN EN ISO 11885 |
| Zink | 20 - 30 | DIN EN ISO 11885 |
| Calcium (CaO) | 0,3 - 0,5 | DIN EN ISO 11885 |
| Magnesium (MgO) | 0,03 - 0,06 | DIN EN ISO 11885 |
| Natrium ($N_2O$) | 0,03 - 0,05 | DIN EN ISO 11885 |
| Kalium ($K_2O$) | 0,05 - 1,5 | DIN EN ISO 11885 |
| Aufschluß mit Königswasser | | DIN EN 13657 |

Nach einem weiteren Aspekt der Erfindung wird das Problem des Weiteren insbesondere dadurch gelöst, dass insbesondere das Verbrennen der Holzfeinfraktion frei von Additiven (additivfrei) erfolgt, insbesondere ohne Zugabe von Kalk zur Schwefelbindung. Dies reduziert die Komplexität des Energiegewinnungsprozesses und verbessert die Ressourcenersparnis.

Nach einem weiteren Aspekt der Erfindung wird das Problem des Weiteren insbesondere dadurch gelöst, dass das erfindungsgemäße Verfahren zur Energiegewinnung direkt einem Verfahren zur Herstellung einer Holzfeinfraktion angeschlossen ist derart, dass die Abluftströme aus dem Verfahren zur Herstellung einer Holzfeinfraktion, insbesondere aus dem Trocknen und/oder dem Zerkleinern, als vorgewärmte Brennerzuluft verwendet werden. Dies reduziert die Komplexität des Energiegewinnungsprozesses und verbessert die Ressourcenersparnis. Nach einem weiteren Aspekt der Erfindung wird das Problem des Weiteren insbesondere dadurch gelöst, dass beim erfindungsgemäßen Verfahren zur Energiegewinnung eine Holzfeinfraktion verbrannt wird, die aus einer inhomogenen Holzschüttgutfraktion aus Altholz der Kategorie AI und/oder AII hervorgeht, insbesondere hergestellt nach einem hier beschriebenen erfindungsgemäßen Verfahren, wobei ein Immissionsschutz vorgesehen ist, der Grenzwerte einhaltbar macht, die dem Standard der "Verordnung über mittelgroße Feuerungs- Gasturbinen- und Verbrennungsmotoranlagen vom 13. Juni 2019 (BGBl. I S. 804)", der sogenannten 44. Bundesimmissionsschutzverordnung (BImSchV), wie ausgefertigt am 13. Juni 2019, entsprechen und/oder die den Vorgaben der Richtlinie (EU) 2015/2193 des Europäischen Parlaments und des Rates vom 25. November 2015 zur Begrenzung der Emissionen bestimmter Schadstoffe aus mittelgroßen Feuerungsanlagen in die Luft (ABl. L 313 vom 28.11.2015, S. 1) entsprechen.

Nach einem weiteren Aspekt der Erfindung wird das Problem des Weiteren insbesondere dadurch gelöst, dass beim erfindungsgemäßen Verfahren zur Energiegewinnung eine Holzfeinfraktion verbrannt wird, die aus einer inhomogenen Holzschüttgutfraktion aus Altholz der Kategorie AIII und/oder AIV hervorgeht, insbesondere hergestellt nach einem hier beschriebenen erfindungsgemäßen Verfahren, wobei ein Immissionsschutz vorgesehen ist, der Grenzwerte einhaltbar macht, die dem Standard der "Verordnung über die Verbrennung und die Mitverbrennung von Abfällen vom 2. Mai 2013 (BGBl. I S. 1021, 1044, 3754)", der sogenannten 17. Bundesimmissionsschutzverordnung (BImSchV), wie ausgefertigt am 02. Mai 2013, entsprechen.

Die hier dargestellten Verfahrensmerkmale und die der Holzfeinfraktion sind austauschbar und nur auf Grund der angestrebten Kürze und Knappheit nicht jeweils doppelt aufgeführt und dargestellt. Vorteile und Eigenschaften gelten entsprechend über die Kategoriegrenzen der Ansprüche hinweg.

Im Folgenden wird die Erfindung anhand von Ausführungsformen in den Figuren beschrieben.

Dabei zeigt

Fig. 1     eine schematische Darstellung einer Braunkohlenverbrennungsanlage;

Fig. 2     eine schematische Darstellung eines Verfahrens zur Braunkohlensubstitution

Fig. 3     eine beispielhafte Größenverteilung der Holzfeinfraktion, dargestellt anhand der Werte in Tabelle 8.

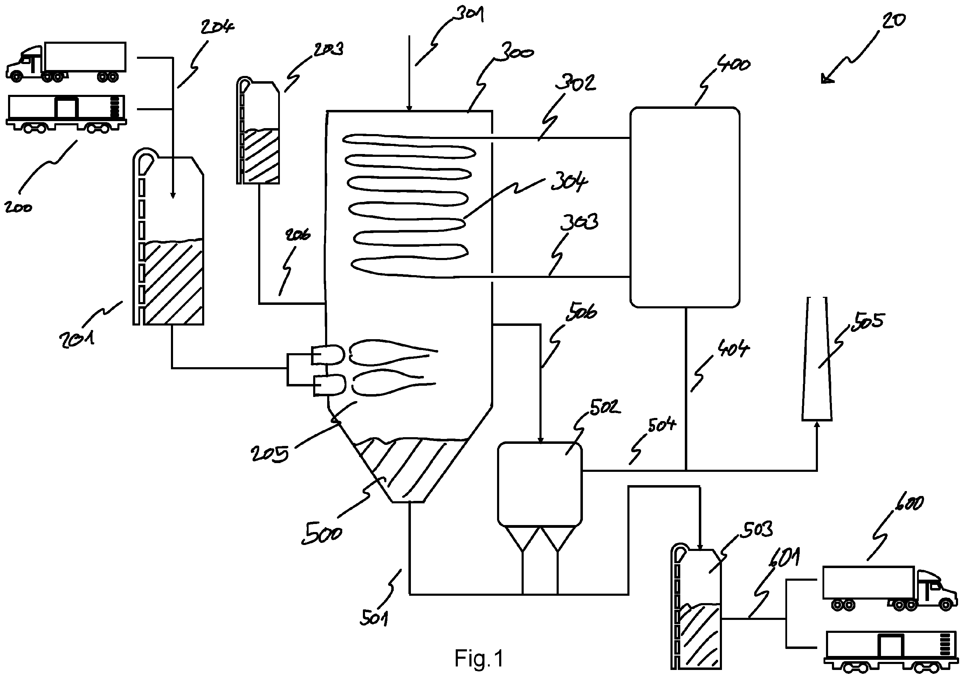

In Fig. 1 ist eine schematische Darstellung einer Braunkohleverbrennungsanlage 20 für die Energiegewinnung gezeigt. Für die Energieerzeugung aus Braunkohle ist zunächst die Braunkohleanlieferung 200 notwendig und der Braunkohleübertrag 204 in Braunkohlelagerungssilos 201. Diese Braunkohle wird dann in Form von Braunkohlestaub in die Brennkammer 300 übertragen zur Verbrennung 205. Um die Verbrennung 205 möglichst sauber durchzuführen sind auch Additive der Brennkammer 300 zuzusetzen. Diese werden ebenfalls angeliefert (nicht gezeigt) und in einem vom Braunkohlelagerungssilo 201 separaten Additive-Lagerungssilo 203 aufbewahrt, bis zum Additive-Eintrag 206 in die Brennkammer 300.

In der Brennkammer 300 findet die Braunkohlestaubverbrennung 205 statt. Der Brennkammer 300 wird dazu Luft durch eine Luftzufuhr 301 zugeführt, um die Verbrennung 205 entsprechend mit Sauerstoff zu speisen. Diese Luftzufuhr 301 kann auch entsprechend gesteuert werden, um die Verbrennung 205 zu optimieren, insbesondere im Hinblick auf die zu gewinnende Energie in der Energiegewinnung 400. Durch die Braunkohlestaubverbrennung 205 wird die nötige Wärme erzeugt, um das Wasser einer Kaltwasserzufuhr 303 in einer Wasseraufheizspirale 304 zu erhitzen und durch eine Warmwasserabfuhr 302 in die Energiegewinnung 400 zu überführen.

Durch die Braunkohlestaubverbrennung 205 in der Brennkammer entsteht eine Aschefraktion 500, die es durch eine Ascheabfuhr 501 zum Aschelagerungssilo 503 zu überführen gilt. Die in die Brennkammer 300 durch die Luftzufuhr 301 eingetragene Luft wird durch die Abluft 506 aus der Brennkammer einer Luftfilterung 502 zugeführt. Nicht gezeigt, aber implementierbar ist, dass Abluft und/oder Rauchgas auch der Feuerung als Rezirkulat zurückgeführt werden kann, um Stickoxide zu mindern. Die Asche wird dabei aus der Luft entfernt und ebenfalls in der Ascheabfuhr 501 in das Aschefraktionlagerungssilo 503 überführt.

Auch aus der Energiegewinnung 400 kann Abluft frei werden (nicht im Detail gezeigt). Diese kann ebenfalls einem Filter zugeführt werden (nicht gezeigt) bevor sie mit der der gefilterten Abluft 504 aus der Luftfilterung 502 vereinigt wird und über einen Schornstein 505 der Atmosphäre zugeführt wird.

Die Aschefraktion 500, die schließlich im Aschefraktionlagerungssilo 503 landet und dort gelagert wird, muss letztendlich wieder durch eine Ascheentnahme 601 aus dem Aschefraktionlagerungssilo 503 entnommen werden und mittels Ascheabtransport 600 der Entsorgung zugeführt werden.

Erfindungswesentlich ist, dass der bislang in den Feuerungsanlagen 20, wie sie in Fig. 1 schematisch dargestellt sind, eingesetzte Braunkohlenstaub durch Holzstaub substituiert wird. Beim Braunkohlestaubsubstitutionsverfahren 10 weist der in einem Holzfeinfraktionherstellungsverfahren 100 hergestellte Holzstaub definierte Parameter und Eigenschaften auf, die eine Nutzung in bestehender Feuerungsanlagentechnik erlaubt. Großvolumige Investitionen in neue Anlagen- und Feuerungstechnik entfällt. Das erfindungsgemäße Braunkohlesubstitutionsverfahren 100 weist als einen wesentlichen Vorteil deutlich geringere Investitionskosten auf, was eine schnelle und wirtschaftliche Adaption des Verfahrens auf andere Braunkohlenstaubfeuerungen 20 ermöglicht.

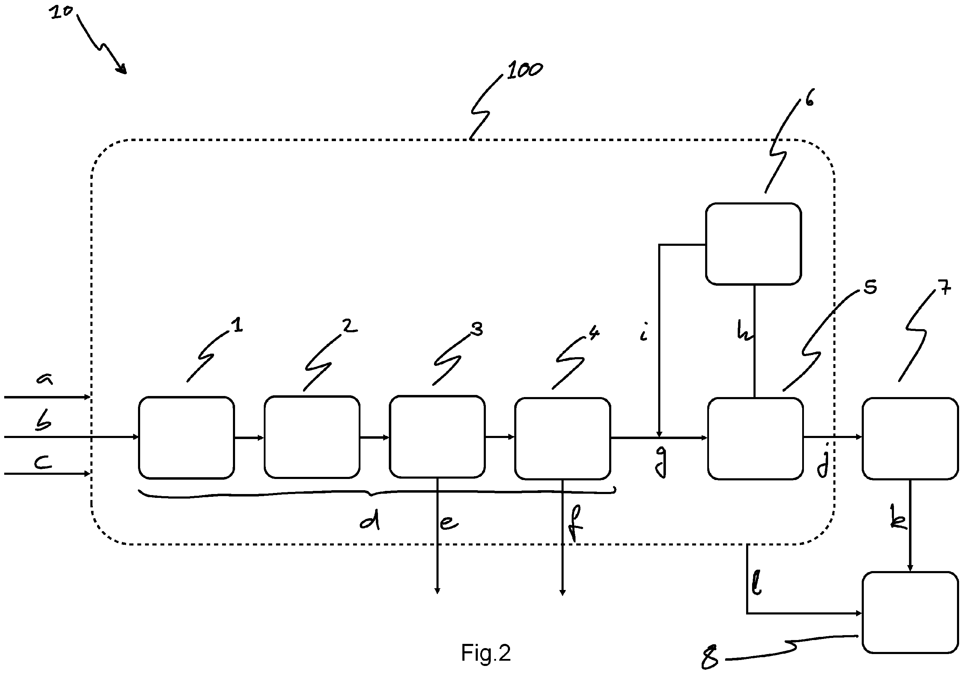

Eine entsprechende Braunkohleverbrennungsanlage 20 für die Energiegewinnung kann also für die Holzfeinfraktionsverbrennung 8 nach dem Transfer f der Holzfeinfraktion in die Braunkohleverbrennungsanlage 20 genutzt werden. Ein entsprechendes Braunkohlesubstitutionsverfahren 10 wird in Fig. 2 schematisch dargestellt.

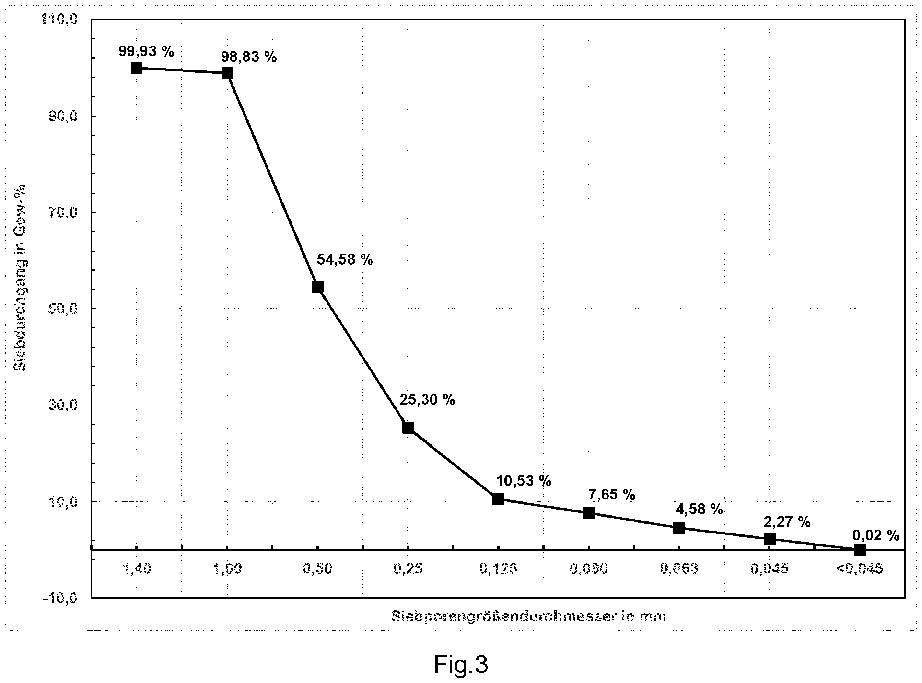

Ausgangsstoff zur Herstellung des Holzstaubs sind Holzschüttgutfraktionen, die im Zuge der stofflichen Altholzaufbereitung (Kategorien A I und A II) anfallen. Diese werden im Folgenden auch einfach als Altholz b bezeichnet. Grundsätzlich stammt Altholz b in Deutschland vorwiegend aus den Bereichen Bau- und Abbruchabfälle sowie der holzverarbeitenden Industrie, welches größtenteils thermisch in Großfeuerungsanlagen verwertet wird. Eine stoffliche Verwertung hingegen wird über die Span- und Grobspanplattenproduktion erreicht. Für diesen Industriezweig zerkleinern Aufbereitungsfirmen das Altholz b, wobei eine inhomogene Holzschüttgutfraktion anfällt, welche von der Spanplattenindustrie nicht gewünscht ist und somit nur in kleinen Mengen von dieser Industrie verwendet werden kann und/oder die direkt als Fraktionen bei der Holzbe-/verarbeitung entstehen, beispielsweise (Schleif-)Stäube. Für diese inhomogene Siebfraktion ist aktuell infolgedessen keine sinnvolle bzw. gezielte Verwertung möglich. Vielmehr wird die ausgeschleuste Holzschüttgutfraktion der thermischen Verwertung, oftmals in Rost- und Wirbelschichtfeuerungen, als unerwünschtes Beifüllmaterial zugeführt. Problematisch ist dabei, dass diese Beimischung unter anderem aufgrund der Inhomogenität und undefinierten Brennstoffeigenschaften zu Agglomeraten, Anbackungen und Verschmutzungen im Kesselbereich einer Brennkammer 300 einhergehend mit Emissionsspitzen und gegebenenfalls Grenzwertüberschreitungen führt. Diese Holzmischfraktion des Altholzes b bildet das Ausgangsmaterial des Holzfeinfraktionherstellungsverfahrens 100. Für den Einsatz in einem Braunkohlenstaubkraftwerk 20 von wesentlicher Bedeutung ist, dass der Brennstoff zum einen frei von Verunreinigungen e, f ist und zum anderen die definierten Parameter hinsichtlich Feuchtigkeitsgehalt und Korngrößenverteilung (siehe dazu Fig. 3) prozesssicher erreicht werden.

Zunächst muss Altholz b in einem Holzfeinfraktionherstellungsverfahren 100 in eine Holzfeinfraktion j zur Lagerung 7 oder Verbrennung 8 überführt werden. Dazu wird das Altholz b in einer Holzaufbereitung d für das Sieben in einem Sieb 5 vorbereitet. Des Weiteren bedarf das Holzfeinfraktionherstellungsverfahren 100 Strom c und einer Dampfzufuhr a.

Zunächst wird das unbehandelte Holz b in einem Schubboden 1 gelagert und aufbewahrt, bevor es einer Trocknung 2 zugeführt wird. Bevor das unbehandelte Altholz b gemahlen wird, gilt es zunächst, das Altholz b auf den definierten Feuchtigkeitsgehalt von 6 bis 9 Prozent zu trocknen. Der Feuchtigkeitsgehalt von üblicherweise offen gelagertem Altholz b beträgt in der Regel zwischen 15 und 28 Prozent. Dabei wird ein möglichst schonender Trocknungsprozess realisiert, bei welchem die Faser- und Zellstruktur beibehalten wird. Darüber hinaus wird eine Verwirbelung der feinen Holzfraktionen mit Blick auf den Explosionsschutz vermieden durch eine Kontakttrocknung in Form einer Schnecken- bzw. Trommelkonstruktion. Um eine möglichst hohe Energieeffizienz bei der Trocknung 2 zu erreichen wird als Wärmemedium niedertemperierter Wasserdampf eingesetzt.

Neben den verbesserten Verbrennungseigenschaften von trockenem Material ist die definierte Trocknung 2 des Altholzes b bei zwei weiteren Aspekten von wesentlicher Bedeutung:
Zum einen kann das Mahlen in der Mühle 6 energieeffizienter realisiert werden und zum anderen ist die benötigte Fluidisierbar- und Förderfähigkeit des Holzstaubs nur im definierten Feuchtigkeitsbereich möglich. Unter Fluidisierbarkeit wird grundsätzlich verstanden, dass sich das Material in einen flüssigähnlichen Zustand versetzen lässt und entsprechend gefördert werden kann.

Nach der erfolgten Trocknung 2 werden (sämtliche) Störstoffe e, f aus dem Altholz b entfernt. Diese Verunreinigungen stellen ein Problem bei den späteren Schritten des Holzfeinfraktionherstellungsverfahren 100 oder der Holzfeinfraktionsverbrennung 8 dar, da sie die Anlagen, etwa die Siebe 5 oder die Mühlen 6 oder die Brennkammer 300, gezeigt in Fig. 1, beschädigen können. Aus diesem Grund müssen diese Nichtholzbestandteile e, f möglichst in ihrer Gänze entfernt werden. Dazu bietet es sich an, zuerst die eisenhaltigen Partikel und Komponenten abzutrennen. Dabei werden über einen Permanentmagnet eisenhaltige Störstoffe wie Nägel oder Klammern in einem Eisenabscheider 3 abgeschieden. Für die Nichteisen-Störstoffe f, wie beispielsweise Aluminium wird in einem Nichteisenabscheider 4 ein Induktionsfeld erzeugt, durch welches ein schnell wechselndes Magnetfeld entsteht. Das Funktionsprinzip beruht dabei darauf, dass elektrisch nichtleitende Legierungen von Nichteisenmetallen zeitweilig durch das Induktionsfeld magnetisch werden und infolgedessen abgeschieden werden können und/oder die durch Wirbelstromabscheider abgeschieden werden (nicht gezeigt).

Zentraler Bestandteil des Holzfeinfraktionherstellungsverfahren 100 ist der darauffolgende Mahlkreislauf bestehend aus Sieb 5 und Mühle 6. Eine auf den Anwendungsbereich abgestimmte Kegelmühle 6 kommt dabei zum Einsatz. Konventionelle Schlaghammermühlen gehen mit einem hohen Energieeinsatz einher und sind für den geplanten Anwendungsbereich ungeeignet, da bei den faserigen Holzstoffen der gewünschte Feinheitsgrad nur über einen definierten Mahlgrad erreicht werden kann. In der Kegelmühle 6 wird über das Spaltmaß zwischen den Mahlplatten die Korngröße exakt eingestellt. Integriert wird die Mühlentechnologie in einen Siebkreislauf, bei welchem zu große Holzpartikel in die Mühle 6 zurückgeführt werden, wenn sie ein entsprechendes Sieb 5 auf Grund ihrer Größe nicht passieren können. Realisiert wird eine möglichst enge Holzstaubgrößenverteilung, wobei 99 Prozent der Holzpartikel eine Größe von weniger als einem Millimeter aufweisen (siehe Fig. 3). Zur Gewährleistung der Versorgungssicherheit am dezentralen Standort wird der Kreislauf g, h, i aus Mühle 6 und Sieb 5 redundant ausgeführt, um bei Störungen, Wartungen oder Ausfällen das Holzfeinfraktionherstellungsverfahren 100 aufrecht zu erhalten.

Um zusätzlich zur angestrebten Nachhaltigkeit im Bereich des Brennstoffeinsatzes eine maximale Energieeffizienz im Holzfeinfraktionherstellungsverfahren 100 zu realisieren, werden sämtliche Abluftströme I der Aufbereitungstechnik erfasst und zielführend genutzt. Dies betrifft insbesondere die Prozessschritte Mühle 6 und Trocknung 2, wobei die Abluftströme I als vorgewärmte Brennerzuluft 301 (in Fig. 1) verwendet werden. Dabei wird zum einen die Brennereffizienz aufgrund der vorgewärmten Brennerzuluft 301 verbessert und zum anderen die in der Abluft I enthaltenen Holzpartikel energetisch verwertet. Die Abluft I des Holzfeinfraktionherstellungsverfahren 100 entfällt somit nicht nur als zusätzliche Emissionsquelle, sondern wird darüber hinaus energetisch zielführend genutzt.

Die Holzfeinfraktion j, k wird schließlich einer Lagerung zugeführt und/oder der Braunkohleverbrennungsanlage 20, je nach gegebenem Bedarf.

Fig. 3 zeigt grafisch die Größenverteilung der Holzfeinfraktion wie sie in der Tabelle 8 angegeben ist. Dabei sind auf der x-Achse die Siebporendurchmesser aufgetragen und auf der y-Achse die Gesamtmenge der durch die Siebporen durchgetretenen Holzfeinfraktion in Gew-%. Die an den Graphen an den jeweiligen Datenpunkten angegebenen Gew-% Werte geben somit an, dass dies einen Maximalwert darstellt. Folglich ist zu erkennen, dass 99 % der Holzpartikel kleiner als 1 mm sind.

**Bezugszeichenliste**

| | |
|---|---|
| 1 | Schubboden |
| 2 | Trocknung |
| 3 | Eisenabscheider |
| 4 | Nichteisenabscheider |
| 5 | Trennen / Sieben / Sieb |
| 6 | Zerkleinern / Mahlen / (Kegel-)Mühle |
| 7 | Lagerung / Transport der Holzfeinfraktion |
| 8 | Verbrennung in Braunkohleverbrennungsanlage für Energieerzeugung |

| | |
|---|---|
| 10 | Braunkohlesubstitutionsverfahren |
| 20 | Braunkohleverbrennungsanlage für Energiegewinnung |

| | |
|---|---|
| 100 | Holzfeinfraktionherstellungsverfahren |

| | |
|---|---|
| 200 | Braunkohleanlieferung |
| 201 | Braunkohlelagerungssilo |
| 203 | Additive-Lagerungssilo |
| 204 | Braunkohleübertrag in Braunkohlelagerungssilo |
| 205 | Braunkohlestaubverbrennung |
| 206 | Additiveeintrag in Brennkammer |

| | |
|---|---|
| 300 | Brennkammer |
| 301 | Luftzufuhr Brennkammer / vorgewärmte, holzstaubhaltige Brennerzuluft |
| 302 | Warmwasserabfuhr für Energiegewinnung |
| 303 | Kaltwasserzufuhr zur Brennkammer |
| 304 | Wasseraufheizspirale |

| | |
|---|---|
| 400 | Energiegewinnung |
| 404 | Abluft aus Energiegewinnung |

| | |
|---|---|
| 500 | Aschefraktion |
| 501 | Ascheabfuhr zu Aschelagerungssilo |
| 502 | Luftfilterung |
| 503 | Aschefraktionlagerungssilo |
| 504 | gefilterte Abluft |
| 505 | Schornstein |
| 506 | Abluft aus Brennkammer |

| | |
|---|---|
| 600 | Ascheabtransport |
| 601 | Ascheentnahme aus Aschefraktionlagerungssilo |

| | |
|---|---|
| a | Dampfzufuhr |
| b | Altholz |
| c | Strom |
| d | Holzaufbereitung für Siebung |
| e | Eisenstörstoffe |
| f | Nicht-Eisenstörstoffe |

g     aufbereitetes Holz für Transfer in Sieb
h     Holzgrobgutfraktion für Transfer in Mühle
i     Mahlgut für Rückführung in Siebung
j     Holzfeinfraktion für Transfer in Lagerung / Transport
k     Holzfeinfraktion für Transfer in Braunkohleverbrennungsanlage
l     Abluft / vorgewärmte, holzstaubhaltige Brennerzuluft

**Patentansprüche**

1. Verfahren (100) zur Herstellung einer Holzfeinfraktion (j,k) als Brennmaterial für die Substitution von Braunkohle bei der Energiegewinnung in Braunkohleverbrennungsanlagen, umfassend die Schritte

- Trocknen (2) einer inhomogenen Holzschüttgutfraktion (b,g), umfassend Fasern, Körner und/oder Partikel mit verschiedenen Größenfraktionen bei der die Verteilungen der Durchmesser und/oder Längen der darin enthaltenen Fasern, Körner und/oder Partikel einer Zufallsverteilung unterliegen und damit auch einer zufälligen Verteilungsstatistik unterliegen,
- Trennen (5) der inhomogenen Holzschüttgutfraktion (b,g) in eine Holzgrobgutfraktion (h,i) und eine Holzfeinfraktion (j,k),
- Zerkleinern (6) der Holzgrobgutfraktion (h,i),
- Rückführen der Holzgrobgutfraktion (h,i) in den Trennungsschritt (5),
- Bereitstellen der Holzfeinfraktion (j,k).

2. Verfahren (100) nach Anspruch 1,
wobei der Feuchtigkeitsgehalt der inhomogenen Holschüttgutfraktion (b,g) beim Trocknen (2) auf einen Wert kleiner als 10 Gew-% (0 Gew-% eingeschlossen), insbesondere zwischen 9 und 1 Gew-%, weiter insbesondere auf einen Wert zwischen 8 und 2 Gew-%, weiter insbesondere auf einen Wert zwischen 7 und 4 Gew-% reduziert wird.

3. Verfahren (100) nach einem der vorhergehenden Ansprüche,
wobei die inhomogene Holzschüttgutfraktion (b,g) Altholz der Kategorie A I und/oder A II gemäß der Altholzverordnung AltholzV 2002-08 ist und/oder wobei die inhomogene Holzschüttgutfraktion (b,g) Altholz der Kategorie A III und/oder A IV gemäß der Altholzverordnung AltholzV 2002-08 ist, für ein Verfahren zur Energiegewinnung mit erhöhtem Immissionsschutz.

4. Verfahren (100) nach einem der vorhergehenden Ansprüche,
wobei das Trocknen (2) eine Kontakttrocknung, insbesondere durch eine Schnecken- bzw. Trommelkonstruktion und/oder Bandtrocknung ist und/oder durch das Einsetzen von niedertemperiertem Wasserdampf (a) als Wärmemedium erfolgt und/oder durch Einsetzen von warmem/heißem Wasser erfolgt.

5. Verfahren (100) nach einem der vorhergehenden Ansprüche,
wobei dem Trennen (5) der inhomogenen Holzschüttgutfraktion (b,g) in die Holzgrobgutfraktion (h,i) und die Holzfeinfraktion (j,k) ein Entfernen von Störstoffen (e,f) vorangeht.

6. Verfahren (100) nach Anspruch 5,
wobei das Entfernen von Störstoffen (e,f) ein Entfernen von nichtholzigen Stoffen und/oder von eisenhaltigen Störstoffen (e) und/oder von nichteisenhaltigen, metallischen Störstoffen (f) und/oder ein Entfernen von nichtmetallischen Störstoffen (f) umfasst.

7. Verfahren (100) nach einem der vorhergehenden Ansprüche,
wobei das Zerkleinern der Holzgrobgutfraktion (h,i) ein Mahlen (5) ist und/oder wobei die Holzfeinfraktion (j,k) direkt aus einem (Alt-)Holzverarbeitungsschritt entsteht und/oder wobei die Holzfeinfraktion (j,k) einen Schleifstaub umfasst und/oder wobei die Holzfeinfraktion (j,k) anfallende Reste aus der allgemeinen Holzverarbeitung umfasst.

8. Verfahren (100) nach einem der vorhergehenden Ansprüche,
wobei das Trennen (5) der inhomogenen Holzschüttgutfraktion (b) ein Sieben (5) ist.

9. Verfahren (100) nach einem der vorhergehenden Ansprüche,
wobei eine Holzfeinfraktion (j,k) bereitgestellt wird, bei der mehr als 50 Gew-% der Körner kleiner als 1 mm sind, weiter mehr als 65 Gew-% der Körner kleiner als 1 mm sind, weiter insbesondere mehr als 80 Gew-% der Körner kleiner als 1 mm sind, weiter insbesondere zwischen 65 Gew-% - 99 Gew-% der Körner kleiner als 1 mm sind und/oder bei der zwischen 30 bis 85 Gew-% der Körner einen Durchmesser zwischen 0,125 und 0,5 mm haben, insbesondere bei der zwischen 40 und 80 Gew-% der Körner einen Durchmesser zwischen 0,125 und 0,5 mm haben.

10. Holzfeinfraktion (j,k), hergestellt nach einem Verfahren (100) gemäß einem der vorhergehenden Ansprüche, wobei mehr als 50 Gew-% der Körner kleiner als 1 mm sind, weiter mehr als 65 Gew-% der Körner kleiner als 1 mm sind, weiter insbesondere mehr als 80 Gew-% der Körner kleiner als 1 mm sind, weiter insbesondere zwischen 65 Gew-% - 99 Gew-% der Körner kleiner als 1 mm sind und/oder bei der zwischen 30 bis 85 Gew-% der Körner einen Durchmesser zwischen 0,125 und 0,5 mm haben, insbesondere bei der zwischen 40 und 80 Gew-% der Körner einen Durchmesser zwischen 0,125 und 0,5 mm haben.

11. Holzfeinfraktion (j,k) nach Anspruch 10, wobei die Holzfeinfraktion (j,k) einen Feuchtigkeitsgehalt kleiner als 10 Gew-% (0 Gew-% eingeschlossen), insbesondere zwischen 9 und 1 Gew-%, weiter insbesondere einen Wert zwischen 8 und 2 Gew-%, weiter insbesondere einen Wert zwischen 7 und 4 Gew-% aufweist.

12. Holzfeinfraktion (j,k) nach einem der Ansprüche 10 oder 11, wobei die Holzfeinfraktion (j,k) eine nach Altholzverordnung AltholzV 2002-08 ermittelbare Gewichtsanteilssumme der polychlorierten Biphenyle 18, 52, 101, 138, 153 und 180 zwischen 0,4 und 0,5 mg / kg, insbesondere zwischen 0,3 und 0,39 mg, weiter insbesondere kleiner als 0,32 mg / kg (ausgenommen 0 mg / kg) aufweist und/oder die Gesamtgewichtsanteilssumme aller polychlorierten Biphenyle kleiner als 10 mg / kg, insbesondere kleiner als 2,5 mg / kg, weiter insbesondere kleiner als 2 mg / kg, noch weiter insbesondere kleiner als 1,7 mg / kg ist.

13. Holzfeinfraktion (j,k) nach einem der Ansprüche 10 bis 12, wobei die Holzfeinfraktion (j,k) eine nach DIN 51705 2001-06 ermittelbare Schüttdichte zwischen 100 kg/m$^3$ und 400 kg/m$^3$ , insbesondere zwischen 150 kg/m$^3$ und 350 kg/m$^3$ , weiter insbesondere zwischen 200 kg/m$^3$ und 300 kg/m$^3$ aufweist und/oder wobei die Holzfeinfraktion eine Stampfdichte von 200 kg/m$^3$ und 600 kg/m$^3$, insbesondere von 250 kg/m$^3$ und 550 kg/m$^3$, weiter insbesondere von 350 kg/m$^3$ und 500 kg/m$^3$ aufweist.

14. Holzfeinfraktion (j,k) nach einem der Ansprüche 10 bis 13, wobei die Holzfeinfraktion (j,k) eine nach DIN ESO 17294-2 2005-02 ermittelbaren Kupferanteil von kleiner 50 mg / kg aufweist, weiter insbesondere kleiner als 40 mg / kg aufweist, weiter insbesondere einen Kupferanteil aufweist, der kleiner 10 mg/kg ist, weiter insbesondere zwischen 1 bis 5 mg /kg liegt, weiter insbesondere zwischen 2 bis 3 mg / kg liegt..

15. Verfahren (10) zur Energiegewinnung, umfassend das

   - Verbrennen einer Holzfeinfraktion (j,k) nach einem der Ansprüche 10 bis 14 in einer Braunkohleverbrennungsanlage (20).

16. Verfahren (10) zur Energiegewinnung nach Anspruch 15, wobei das Verbrennen der Holzfeinfraktion (j,k) frei von Additiven (additivfrei) erfolgt, insbesondere ohne Zugabe von Kalk zur Schwefelbindung.

17. Verfahren (10) zur Energiegewinnung nach Anspruch 15 oder 16, wobei es direkt einem Verfahren (100) nach einem der Ansprüche 1 bis 9 angeschlossen ist derart, dass die Abluftströme (I) aus dem Verfahren (100) nach einem der Ansprüche 1 bis 9, insbesondere aus dem Trocknen (2) und/oder dem Zerkleinern (6), als vorgewärmte Brennerzuluft (301) verwendet werden.

18. Verfahren (10) zur Energiegewinnung nach einem der Ansprüche 15 bis 17, wobei eine Holzfeinfraktion (j,k) verbrannt wird, die aus einer inhomogenen Holzschüttgutfraktion (b) aus Altholz der Kategorie AI und/oder AII hervorgeht, insbesondere hergestellt nach einem Verfahren gemäß Anspruch 3, wobei ein Immissionsschutz vorgesehen ist, der Grenzwerte einhaltbar macht, die dem Standard der "Verordnung über mittelgroße Feuerungs- Gasturbinen- und Verbrennungsmotoranlagen vom 13. Juni 2019 (BGBl. I S. 804)", der sogenannten 44. Bundesimmissionsschutzverordnung (BImSchV), wie ausgefertigt am 13. Juni 2019, entsprechen und/oder die den Vorgaben der Richtlinie (EU) 2015/2193 des Europäischen Parlaments und des Rates vom 25. November 2015 zur Begrenzung der Emissionen bestimmter Schadstoffe aus mittelgroßen Feuerungsanlagen

in die Luft (ABl. L 313 vom 28.11.2015, S. 1) entsprechen.

**19.** Verfahren (10) zur Energiegewinnung nach einem der Ansprüche 15 bis 17, wobei eine Holzfeinfraktion (j,k) verbrannt wird, die aus einer inhomogenen Holzschüttgutfraktion (b) aus Altholz der Kategorie AIII und/oder AIV hervorgeht, insbesondere hergestellt nach einem Verfahren gemäß Anspruch 3,
wobei ein Immissionsschutz vorgesehen ist, der Grenzwerte einhaltbar macht, die dem Standard der "Verordnung über die Verbrennung und die Mitverbrennung von Abfällen vom 2. Mai 2013 (BGBl. I S. 1021, 1044, 3754)", der sogenannten 17. Bundesimmissionsschutzverordnung (BImSchV), wie ausgefertigt am 02. Mai 2013, entsprechen.

## Claims

**1.** A process (100) for producing a fine wood fraction (j,k) as fuel to substitute lignite for the generation of energy in lignite combustion plants,
comprising the steps of

- drying (2) an inhomogeneous bulk wood fraction (b,g) comprising fibers, grains and/or particles with different size fractions in which the distributions of the diameters and/or lengths of the fibers, grains and/or particles contained therein are subject to a random distribution, and thus are also subject to random distribution statistics,
- separating (5) the inhomogeneous bulk wood fraction (b,g) into a coarse wood fraction (h,i) and a fine wood fraction (j,k),
- comminuting (6) the coarse wood fraction (h,i),
- returning the coarse wood fraction (h,i) to the separation step (5),
- providing the fine wood fraction (j,k).

**2.** The process (100) according to claim 1,
wherein the moisture content of the inhomogeneous bulk wood fraction (b,g) is reduced during drying (2) to a value of less than 10% by weight (including 0% by weight), more particularly between 9 and 1% by weight, even more particularly to a value between 8 and 2% by weight, even more particularly to a value between 7 and 4% by weight.

**3.** The process (100) according to any one of the preceding claims,
wherein the inhomogeneous bulk wood fraction (b,g) is waste wood of category AI and/or AII according to the Altholzverordnung (German Waste Wood Ordinance) AltholzV 2002-08, and/or wherein the inhomogeneous bulk wood fraction (b,g) is waste wood of category AIII and/or AIV according to the Altholzverordnung AltholzV 2002-08, for a process for energy generation with increased immission control.

**4.** The process (100) according to any one of the preceding claims,
wherein drying (2) is contact drying, more particularly by means of a screw or drum device, and/or belt drying, and/or is done using low-temperature water vapor (a) as a heat medium, and/or is done using warm/hot water.

**5.** The process (100) according to any one of the preceding claims,
wherein separating (5) the inhomogeneous bulk wood fraction (b,g) into the coarse wood fraction (h,i) and the fine wood fraction (j,k) is preceded by removing interfering substances (e,f).

**6.** The process (100) according to claim 5,
wherein removing interfering substances (e,f) comprises removing non-woody substances and/or of ferrous interfering substances (e) and/or of non-ferrous, metallic interfering substances (f) and/or removing non-metallic interfering substances (f).

**7.** The process (100) according to any one of the preceding claims,
wherein comminuting the coarse wood fraction (h,i) is grinding (5), and/or wherein the fine wood fraction (j,k) is generated directly from a (waste) wood processing step, and/or wherein the fine wood fraction (j,k) comprises a sanding dust, and/or wherein the fine wood fraction (j,k) comprises residues generated in the general wood processing.

**8.** The process (100) according to any one of the preceding claims,
wherein separating (5) the inhomogeneous bulk wood fraction (b) is sieving (5).

9. The process (100) according to any one of the preceding claims,
wherein a fine wood fraction (j,k) is provided in which more than 50% by weight of the grains are smaller than 1 mm, further more than 65% by weight of the grains are smaller than 1 mm, further more particularly more than 80% by weight of the grains are smaller than 1 mm, further more particularly between 65% by weight and 99% by weight of the grains are smaller than 1 mm, and/or in which between 30 and 85% by weight of the grains have a diameter of between 0.125 and 0.5 mm, more particularly in which between 40 and 80% by weight of the grains have a diameter of between 0.125 and 0.5 mm.

10. A fine wood fraction (j,k) produced by a process (100) according to any one of the preceding claims,
wherein more than 50% by weight of the grains are smaller than 1 mm, further more than 65% by weight of the grains are smaller than 1 mm, further more particularly more than 80% by weight of the grains are smaller than 1 mm, further more particularly between 65% by weight and 99% by weight of the grains are smaller than 1 mm, and/or in which between 30 and 85% by weight of the grains have a diameter of between 0.125 and 0.5 mm, more particularly in which between 40 and 80% by weight of the grains have a diameter of between 0.125 and 0.5 mm.

11. The fine wood fraction (j,k) according to claim 10,
wherein the fine wood fraction (j,k) has a moisture content of less than 10% by weight (including 0% by weight), more particularly between 9 and 1% by weight, more particularly a value between 8 and 2% by weight, more particularly a value between 7 and 4% by weight.

12. The fine wood fraction (j,k) according to any one of the claims 10 or 11, wherein the fine wood fraction (j,k) has a proportional weight sum of the polychlorinated biphenyls 18, 52, 101, 138, 153 and 180, determinable according to the Altholzverordnung AltholzV 2002-08, of between 0.4 and 0.5 mg/kg, more particularly of between 0.3 and 0.39 mg, even more particularly of less than 0,32 mg/kg (except 0 mg/kg), and/or the total proportional weight sum of all polychlorinated biphenyls is less than 10 mg/kg, more particularly less than 2.5 mg/kg, even more particularly less than 2 mg/kg, still even more particularly less than 1.7 mg/kg.

13. The fine wood fraction (j,k) according to any one of the claims 10 to 12, wherein the fine wood fraction (j,k) has a bulk density, determinable according to DIN 51705 2001-06, of between 100 kg/m$^3$ and 400 kg/m$^3$, more particularly of between 150 kg/m$^3$ and 350 kg/m$^3$, even more particularly of between 200 kg/m$^3$ and 300 kg/m$^3$, and/or wherein the fine wood fraction has a tapped density of 200 kg/m$^3$ and 600 kg/m$^3$, more particularly of 250 kg/m$^3$ and 550 kg/m$^3$, even more particularly of 350 kg/m$^3$ and 500 kg/m$^3$.

14. The fine wood fraction (j,k) according to any one of the claims 10 to 13, wherein the fine wood fraction (j,k) has a copper content, determinable according to DIN ESO 17294-2 2005-02, of less than 50 mg/kg, even more particularly less than 40 mg/kg, even more particularly a copper content of less than 10 mg/kg, even more particularly of between 1 and 5 mg/kg, even more particularly of between 2 and 3 mg/kg.

15. A process (10) for generating energy, comprising the

   - combustion of a fine wood fraction (j,k) according to any one of the claims 10 to 14 in a lignite combustion plant (20).

16. The process (10) for generating energy according to claim 15,
wherein the combustion of the fine wood fraction (j,k) is done free of additives (additive-free), more particularly without the addition of lime for sulfur binding.

17. The process (10) for generating energy according to claim 15 or 16,
wherein it is directly connected to a process (100) according to any one of the claims 1 to 9, such that the exhaust air flows (I) from the process (100) according to one of the claims 1 to 9, more particularly from drying (2) and/or comminuting (6), are used as preheated burner supply air (301).

18. The process (10) for generating energy according to any one of the claims 15 to 17,
wherein a fine wood fraction (j, k) is incinerated that is produced from an inhomogeneous bulk wood fraction (b) of waste wood of category AI and/or AII, more particularly produced by a process according to claim 3, wherein an immission control is provided which makes it possible to comply with limit values corresponding to the standard of the "Verordnung über mittelgroße Feuerungs-, Gasturbinen- und Verbrennungsmotoranlagen of 13 June 2019 (BGBI. I p. 804)", the so-called 44. Bundesimmissionsschutzverordnung (BImSchV, 44th Federal Immission Control Ordinance), as issued on 13 June 2019, and/or which comply with the requirements of Directive (EU) 2015/2193 of the European Parliament and of the Council of 25 November 2015 on the limitation of emissions of certain pollutants into the air from medium combustion plants (OJ L 313, of 28 November 2015, p. 1).

19. The process (10) for generating energy according to any one of the claims 15 to 17,
wherein a fine wood fraction (j, k) is incinerated which is produced from an inhomogeneous bulk wood fraction (b) of waste wood of category AIII and/or AIV, more particularly produced by a process according to claim 3, wherein an immission control is provided which makes it possible to comply with limit values corresponding to the standard of the "Verordnung über die Verbrennung und die Mitverbrennung von Abfällen of 2 May 2013 (BGBl. I p. 1021, 1044, 3754)" of the so-called 17. Bundesimmissionsschutzverordnung (BImSchV), as issued on 2 May 2013.

**Revendications**

1. Procédé (100) de fabrication d'une fraction fine de bois (j, k) en tant que matériau combustible pour la substitution de lignite lors de la production d'énergie dans des installations d'incinération de lignite, comprenant les étapes

   - de séchage (2) d'une fraction de produit en vrac en bois non homogène (b, g), comprenant
   des fibres, des grains et/ou des particules avec différentes fractions de taille, pour laquelle les répartitions des diamètres et/ou longueurs des fibres, grains et/ou particules qui y sont contenus sont soumises à une répartition aléatoire et sont soumises ainsi également à une statistique de répartition aléatoire,
   - de séparation (5) de la fraction de produit en vrac en bois non homogène (b, g) en une fraction de produit grossier en bois (h, i) et en une fraction fine de bois (j, k),
   - de fragmentation (6) de la fraction de produit grossier en bois (h, i),
   - de retour de la fraction de produit grossier en bois (h, i) à l'étape de séparation (5),
   - de fourniture de la fraction fine de bois (j, k).

2. Procédé (100) selon la revendication 1,
dans lequel le taux d'humidité de la fraction de produit en vrac en bois non homogène (b, g) est réduit lors du séchage (2) sur une valeur inférieure à 10 % en poids (y compris 0 % en poids), en particulier entre 9 et 1 % en poids, par ailleurs en particulier sur une valeur entre 8 et 2 % en poids, par ailleurs en particulier sur une valeur entre 7 et 4 % en poids.

3. Procédé (100) selon l'une quelconque des revendications précédentes,
dans lequel la fraction de produit en vrac en bois non homogène (b, g) est du vieux bois de la catégorie AI et/ou AII selon le règlement allemand du vieux bois AltholzV 2002-08 et/ou dans lequel la fraction de produit en vrac en bois non homogène (b, g) est du vieux bois de la catégorie AIII et/ou AIV selon le règlement allemand du vieux bois 2002-08 pour un procédé de production d'énergie avec une protection élevée contre les immissions.

4. Procédé (100) selon l'une quelconque des revendications précédentes,
dans lequel le séchage (2) est un séchage par contact, en particulier par une structure à vis ou à tambour, et/ou un séchage de bande, et/ou est effectué en utilisant en tant que milieu caloporteur de la vapeur d'eau (a) à basse température et/ou est effectué en utilisant de l'eau chaude/très chaude.

5. Procédé (100) selon l'une quelconque des revendications précédentes,
dans lequel une élimination d'impuretés (e, f) précède la séparation (5) de la fraction de produit en vrac en bois non homogène (b, g) en la fraction de produit grossier en bois (h, i) et en la fraction fine de bois (j, k).

6. Procédé (100) selon la revendication 5,
dans lequel l'élimination d'impuretés (e, f) comprend une élimination de substances ne contenant pas du bois et/ou d'impuretés (e) contenant du fer et/ou d'impuretés métalliques (f) ne contenant pas du fer et/ou une élimination d'impuretés (f) non métalliques.

7. Procédé (100) selon l'une quelconque des revendications précédentes,
dans lequel la fragmentation de la fraction de produit grossier en bois (h, i) est un broyage (5), et/ou dans lequel la fraction fine de bois (j, k) se forme directement à partir d'une étape de traitement de (vieux) bois et/ou dans lequel la fraction fine de bois (j, k) comprend une poussière de meulage et/ou dans lequel la fraction fine de bois (j, k) comprend des résidus se formant issus du traitement du bois général.

8. Procédé (100) selon l'une quelconque des revendications précédentes,
dans lequel la séparation (5) de la fraction de produit en vrac de bois non homogène (b) est un tamisage (5).

9. Procédé (100) selon l'une quelconque des revendications précédentes,
dans lequel une fraction fine de bois (j, k) est fournie, pour laquelle plus de 50 % en poids des grains sont inférieurs à 1 mm, par ailleurs plus de 65 % en poids des grains sont inférieurs à 1 mm, par ailleurs en particulier plus de 80 % en poids des grains sont inférieurs à 1 mm, par ailleurs en particulier entre 65 % en poids - 99 % en poids des grains sont inférieurs à 1 mm et/ou pour laquelle entre 30 et 85 % en poids des grains ont un diamètre entre 0,125 et 0,5 mm, en particulier pour laquelle entre 40 et 80 % en poids des grains ont un diamètre entre 0,125 et 0,5 mm.

10. Fraction fine de bois (j, k) fabriquée selon un procédé (100) selon l'une quelconque des revendications précédentes,
dans laquelle plus de 50 % en poids des grains sont inférieurs à 1 mm, par ailleurs plus de 65 % en poids des grains sont inférieurs à 1 mm, par ailleurs en particulier plus de 80 % en poids des grains sont inférieurs à 1 mm, par ailleurs en particulier entre 65 % en poids - 99 % en poids des grains sont inférieurs à 1 mm et/ou pour laquelle entre 30 à 85 % en poids des grains ont un diamètre entre 0,125 et 0,5 mm, en particulier pour laquelle entre 40 et 80 % en poids des grains ont un diamètre entre 0,125 et 0,5 mm.

11. Fraction fine de bois (j, k) selon la revendication 10, dans laquelle la fraction fine de bois (j, k) présente un taux d'humidité inférieur à 10 % en poids (0 % en poids y compris), en particulier entre 9 et 1 % en poids présente par ailleurs en particulier une valeur entre 8 et 2 % en poids, par ailleurs en particulier une valeur entre 7 et 4 % en poids.

12. Fraction fine de bois (j, k) selon l'une quelconque des revendications 10 ou 11,
dans laquelle la fraction fine de bois (j, k) présente une somme des proportions en poids, pouvant être déterminée selon le règlement du vieux bois AltholzV 2002-08, des biphényles polychlorés 18, 52, 101, 138, 153 et 180 entre 0,4 et 0,5 mg/kg, en particulier entre 0,3 et 0,39 mg, par ailleurs en particulier inférieure à 0,32 mg/kg (à l'exception de 0 mg/kg) et/ou la somme de proportions en poids totale de tous les biphényles polychlorés est inférieure à 10 mg/kg, en particulier inférieure à 2,5 mg/kg, par ailleurs en particulier inférieure à 2 mg/kg, encore par ailleurs en particulier inférieure à 1,7 mg/kg.

13. Fraction fine de bois (j, k) selon l'une quelconque des revendications 10 à 12,
dans laquelle la fraction fine de bois (j, k) présente une masse volumique apparente, pouvant être déterminée selon la norme DIN 51705 2001-06, entre 100 kg/m$^3$ et 400 kg/m$^3$, en particulier entre 150 kg/m$^3$ et 350 kg/m$^3$, par ailleurs en particulier entre 200 kg/m$^3$ et 300 kg/m$^3$ et/ou dans laquelle la fraction fine de bois présente une masse volumique après tassement de 200 kg/m$^3$ et 600 kg/m$^3$, en particulier de 250 kg/m$^3$ et 550 kg/m$^3$, par ailleurs en particulier de 350 kg/m$^3$ et 500 kg/m$^3$.

14. Fraction fine de bois (j, k) selon l'une quelconque des revendications 10 à 13,
dans laquelle la fraction fine de bois (j, k) présente une proportion de cuivre, pouvant être déterminée selon la norme DIN ISO 17294-2 2005-02, inférieure à 50 mg/kg, par ailleurs en particulier inférieure à 40 mg/kg, par ailleurs présente en particulier une proportion de cuivre, qui est inférieure à 10 mg/kg, se situe par ailleurs en particulier entre 1 à 5 mg/kg, se situe par ailleurs en particulier entre 2 à 3 mg/kg.

15. Procédé (10) de production d'énergie, comprenant

- l'incinération d'une fraction fine de bois (j, k) selon l'une quelconque des revendications 10 à 14 dans une installation d'incinération de lignite (20).

16. Procédé (10) de production d'énergie selon la revendication 15,
dans lequel la combustion de la fraction fine de bois (j, k) a lieu sans additifs (exempte d'additifs), en particulier sans ajout de chaux pour la liaison soufre.

17. Procédé (10) de production d'énergie selon la revendication 15 ou 16,
dans lequel il se situe directement dans le prolongement d'un procédé (100) selon l'une quelconque des revendications 1 à 9 de telle manière que les flux d'air d'échappement (I) issus du procédé (100) selon l'une quelconque des revendications 1 à 9, en particulier issus du séchage (2) et/ou de la fragmentation (6), sont utilisés en tant qu'air entrant de brûleur préchauffé (301).

18. Procédé (10) de production d'énergie selon l'une quelconque des revendications 15 à 17,

dans lequel une fraction fine de bois (j, k) est incinérée, qui résulte d'une fraction de produit en vrac en bois non homogène (b) en vieux bois de la catégorie AI et/ou AII, en particulier fabriquée selon un procédé selon la revendication 3,

dans lequel est prévu une protection contre les immissions, qui permet de respecter des valeurs limites, qui correspondent à la norme du « règlement relatif aux usines d'incinération, de turbines à gaz et de moteurs à combustion interne du 13 juin 2019 (BGBI. I p. 804) » de ladite 44e loi fédérale allemande de protection contre les immissions (BImSchV - Bundesimmissionsschutzverordnung), telle qu'établie le 13 juin 2019 et/ou qui correspondent aux prescriptions de la Directive (UE) 2015-2193 du Parlement européen et du Conseil du 25 novembre 2015 relative à la limitation des émissions de certains polluants dans l'atmosphère en provenance d'installations de combustion de taille moyenne (JO L 313 du 28/11/2015, p. 1) .

19. Procédé (10) de production d'énergie selon l'une quelconque des revendications 15 à 17,

dans lequel une fraction fine de bois (j, k) est incinérée, qui résulte d'une fraction de produit en vrac en bois non homogène (b) en vieux bois de la catégorie AIII et/ou AIV, en particulier fabriquée selon le procédé selon la revendication 3,

dans lequel est prévue une protection contre les immissions, qui permet de respecter des valeurs limites, qui correspondent à la norme du « règlement relatif l'incinération et à la co-incinération de déchets du 2 mai 2013 (Journal officiel fédéral I p. 1021, 1044, 3754) » de ladite 17e loi fédérale allemande de protection contre les immissions (BImSchV - Bundesimmissionsschutzverordnung), telle qu'établie le 2 mai 2013.

Fig.1

EP 3 926 150 B1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Waste wood as bioenergy feedstock. Climate change impacts and related emission uncertainties from waste wood based energy systems in the UK Waste wood. **MIRJAM RÄDER ; PATRICIA THORNLEY.** WASTE MANAGEMENT. ELSEVIER, 06. Dezember 2017, vol. 74, 241-252

- **BRAUN ; STEINKOHLEN.** *Daten und Fakten,* 2017
- **MAAßEN ; SCHIFFER.** *Braunkohle in Deutschland, Sicherheit für die Stromversorgung,* 2017